(19) Europäisches Patentamt

European Patent Office

Office européen des brevets

(11) **EP 1 381 033 B1**

(12) **EUROPEAN PATENT SPECIFICATION**

(45) Date of publication and mention
of the grant of the patent:
**04.03.2009   Bulletin 2009/10**

(51) Int Cl.:
***G11B 7/007*** *(2006.01)*   ***G11B 7/0045*** *(2006.01)*

(21) Application number: **03254394.4**

(22) Date of filing: **11.07.2003**

(54) **Optical information recording medium, method for determining recording condition, optical information recording apparatus, and information processing apparatus**

Optisches Informationsaufzeichnungsmedium, Verfahren zur Festellung der Aufzeichnungsbedingung, optisches Informationsaufzeichnungsgerät und Informationsverarbeitungsgerät

Support d'enregistrement optique d'informations, procédé pour déterminer des conditions d'enregistrement, dispositif d'enregistrement optique d'informations et dispositif de traitement d'informations

(84) Designated Contracting States:
**DE ES FR GB IT NL**

(30) Priority:  **11.07.2002   JP 2002203023**

(43) Date of publication of application:
**14.01.2004   Bulletin 2004/03**

(73) Proprietor: **Ricoh Company, Ltd.
Tokyo 143-8555 (JP)**

(72) Inventors:
• **Narumi, Shinya
Yokohama-shi, Kanagawa (JP)**

• **Kato, Masakai
Sagamihara-shi, Kanagawa (JP)**
• **Yamada, Katsuyuki
Zama-shi, Kanagawa-ken (JP)**

(74) Representative: **Lamb, Martin John Carstairs
Marks & Clerk
90 Long Acre
London WC2E 9RA (GB)**

(56) References cited:
**EP-A- 1 026 671       EP-A- 1 035 539
EP-A- 1 059 630       EP-A- 1 182 649
US-A- 5 835 462**

**Description**

BACKGROUND OF THE INVENTION

Field of the Invention

The present invention relates to a recordable optical information recording medium, particularly, a phase-change optical information recording medium such as CD-RW, DVD-RAM, DVD-RW, or DVD+RW, a method for determining recording condition used for recording information onto the optical information recording medium, and an optical information recording apparatus and an information processing apparatus for the optical information recording medium.

Description of the Related Art

As optical information recording media to/from which information is recorded/reproduced by irradiation of a laser beam, various media such as write-once CD-R, DVD-R, and DVD+R and rewritable CD-RW, DVD-RW, DVD+RW, DVD-RAM, MD, and MO disk are practically used. These optical information recording media as removable media are replacing magnetic recording media such as a cassette tape and an FD and are in increasing demand year after year.
Among the optical information recording media, CD-RW, DVD-RW, DVD+RW, DVD-RAM and the like utilize, as a material of a recording layer, a so-called phase-change material in which the structure thereof transits between a crystalline phase and an amorphous phase or between crystalline phases. Particularly, overwriting with a single beam, which is difficult to be carried out in a magnetooptic memory such as MD or MO, is easily carried out and an optical system on a corresponded recording/reproduction apparatus is simpler. Consequently, a phase-change optical information recording medium is in increasing demand.
As the society is becoming more information-oriented and the amount of information handled is increasing, higher-speed recording of a larger amount of information is being requested. Those optical information recording media are expected to achieve higher density and higher linear velocity.
In order to perform an excellent overwrite of information, in the case of recording information onto a phase-change optical information recording medium, recording, erasing, or rewriting is generally performed by using a recording strategy of a multipulse pattern which is modulating the power level of a laser beam in three levels of a recording level (heating level) Pw, a bias level (cooling level) Pb, and an erasing level Pe. In the case of recording information to the same optical information recording medium at different linear velocities like multi-speed recording or CAV (Constant Angular Velocity) recording, the amount of energy for increasing the temperature of a recording layer in a high linear velocity range is larger than that in a low linear velocity range, so that optimum recording conditions vary. Consequently, excellent quality of recording is managed by setting optimum recording conditions corresponding to each liner velocities. Namely, a higher recording power is set in a high liner velocity range, compared with that in a low liner velocity range, and a recording strategy is set so as to increase an interval of applying a power level at a high-level pulse of a multipulse part.
The optimum recording conditions vary according to the material, structure, and specifications of an optical information recording medium, the configuration and specifications of an optical information recording apparatus, and the like. According to an often employed method, therefore, information of standard recording conditions is preliminarily stored in an optical information recording medium. On the basis of the information, test recording is performed just before recording in each optical information recording apparatus into which the optical information recording medium is loaded to determine detailed settings of the recording conditions.
However, the information stored as the standard recording conditions has a capacity only for one type of a pulse pattern, so that a recordable linear velocity range is limited to the linear velocity range with which the pulse pattern can be recorded.
For example, CD-RW media include an optical information recording medium adapted to multispeed recording (1× - 4× recording: Orange Book Part III, Vol. 1) and an optical information recording medium adapted to high-speed recording (4× - 10× recording: Orange Book Part III, Vol. 2). On the CD-RW medium adapted to multispeed recording, only information of parameters of pulse patterns for performing 1×, 2×, and 4× recording is recorded. On the CD-RW medium adapted to high-speed recording, only information of parameters of pulse patterns for performing 4×, 8×, and 10× recording is recorded. The recording performance is hence limited to 1× to 4× recording on the CD-RW medium adapted to multispeed recording, and to 4× to 10× recording on the CD-RW medium adapted to high-speed recording.
In addition, in the case of using an optical information recording apparatus adapted only to multispeed recording, the apparatus cannot record information on a CD-RW medium adapted to high-speed recording. This is actually a limitation due to constraints in specification. The limitation is set because an optical information recording apparatus cannot perform recording exceeding limits of specification thereof. Specifically, the high-speed recording such as 8× or 10×, exceeds limits of specifications of a CD-RW recording apparatus adapted to multispeed recording such as a rotational speed of a spindle motor and/or an upper limit of a power level of a pulse pattern of a laser beam and/or pulse width minimum time.

Therefore, each time a new standard is set in correspondence with higher-speed recording and an optical information recording medium conforming to the new standard appears, existing optical information recording apparatuses become old-fashioned and their capability regarding recording speed becomes low. This tendency leads that a number of apparatuses have short lives as products and are discarded.

As a result, at present and in future, in circumstances where various optical information recording media and various optical information recording apparatuses exist or can exist, due to lack of consideration of compatibility and matching between a medium and an apparatus, there are following cases. An optical information recording apparatus can record information on an optical information recording medium but another optical information recording apparatus cannot record information on the medium though the recording system is the same. An optical information recording apparatus can record information on an optical information recording medium but cannot record information on another optical information recording medium. Further, although recording can be performed but the recording is limited to a low linear velocity range. The compatibility or matching in a combination between an optical information recording medium and an optical information recording apparatus is low.

US 5835462 discloses an information carrier for different recording processes and a device for recording therein containing velocity - related information indicative of the recording process related to a recording velocity, remaining recording parameters being given for a minimum and/or maximum recording velocity at which the information carrier can be recorded.

EP-A-1182649 discloses an optical recording method and an optical recording medium in which information is recorded by using a plurality of recording mark lengths using a 2T cycle pattern.


SUMMARY OF THE INVENTION


An object of the present invention is to improve compatibility of matching between an optical information recording medium and an optical information recording apparatus by enabling information to be recorded or rewritten maximally in an arbitrary combination of an optical information recording median and an optical information recording apparatus of the same recording. system.

Another object of the present invention is to prevent an optical information recording apparatus from becoming an old-model and to prolong life of the apparatus as a product by improving compatibility or matching between an optical information recording medium and an optical information recording apparatus in an arbitrary combination.

Further another object of the present invention is to realize improvement in compatibility or matching between an optical information recording medium and an optical information recording apparatus in an arbitrary combination with the minimum amount of pre-formatted information.

Further another object of the present invention is to make an optical information recording medium suited to be applied to an external memory device or the like of a computer by making recording operation performed at speed as high as possible by improving compatibility or matching between the optical information recording medium and an optical information recording apparatus in an arbitrary combination.

According to a first aspect of the optical information recording medium of the present invention, there is provided An optical information recording medium, comprising:

> a transparent substrate having one of concentric-circle guide grooves and a spiral guide groove; and
> a phase-change recording layer, on the transparent substrate, which is for generating a phase-change by being exposed to a laser beam the emission of which is controlled where recording marks and spaces between the recording marks both having duration "nT", in which "n" expresses nonnegative integer, and "T" expresses a reference clock period, are to be marked, using Pulse Width Modulation, so as to record, erase, and rewrite information,

wherein the optical information recording medium has recording conditional information pre-formatted thereon, characterised in that the recording conditional information includes information on parameters of a plurality of multipulse patterns having different applied linear as velocity ranges and information on each of the different linear velocities at which information can be recorded with each of the multipulse patterns, wherein the multipulse patterns are combinations of a heating pulse and a cooling pulse, which specify a light emission waveform of the laser beam, wherein one of the multipulse patterns is a 1T cycle pattern including a part where the combination of the heating pulse and the cooling pulse is set as a 1T cycle, and

another one of the multipulse patterns is a 2T cycle pattern including a part where the combination of the heating pulse and the cooling pulse is set as a 2T cycle, and the information includes a first linear velocity range for a 1T cycle and a second linear velocity range for a 2T cycle.

In the present invention, the "applied linear velocity range" is not limited to a range of linear velocities such as from 9.6 m/ s (corresponding to 8× of reproduction of a CD-ROM) to 28.8. m/s (corresponding to 24× of reproduction of a CD-ROM) but includes the case of only a specified linear velocity (that is, lowest linear velocity = highest linear velocity) fixed to, for example, 19.2 m/s (corresponding to 16× of reproduction of a CD-ROM). "Different applied linear velocity ranges" means that ranges each from the lowest linear velocity to the highest linear velocity are different from each other as a whole and allows that the ranges are partially overlapped with each other like a combination of the range from 9.6 m/s (corresponding to 8× of reproduction of a CD-ROM) to 19.2 m/ s (corresponding to 16× of reproduction of a CD-ROM) and the range from 9.6 m/s (corresponding to 8× of reproduction of a CD-ROM) to 38.4 m/s (corresponding to 32× of reproduction of a CD-ROM)

The parameters of a plurality of multipulse patterns in different applied linear velocity ranges, and the information of linear velocities at which information can be recorded on the medium with each of the multipulse patterns is pre-formatted as recording conditional information. Consequently, in the case where the optical information recording medium is loaded into an optical information recording apparatus and provided for recording, erasing, or rewriting information, by using the plurality of multipulse patterns, the information regarding the recordable linear velocities of the optical information recording medium can be provided in a wider range of the different applied linear velocity ranges to the apparatus. The apparatus can select a recording condition according to the performances of itself. Thus, recording, erasing, or rewriting of information can be maximally performed in an arbitrary combination with an optical information recording apparatus of the same recording method, and compatibility cr matching in an arbitrary combination between the optical information recording medium and the optical information recording apparatus is improved.

According to a second aspect of the optical information recording medium of the present invention, the recording conditional information further include parameters of test recording corresponding to each of the multipulse patterns.

In actual determination of a recording condition, test recording for setting an optimum light emission power of a laser beam is often performed. Since the parameters of the test recording corresponding to each of the multipulse patterns are also pre-formatted as the recording conditional information, an operation of the test recording according to a selected multipulse pattern can be performed simply and adequately.

The 2T cycle pattern including a part in which a combination of the heating pulse and the cooling pulse is set as a 2T cycle, is a multipulse pattern adapted to high-speed recording. It was devised to address a problem that in the case of recording information using a laser beam according to a multipulse pattern, when recording linear velocity becomes high, the basic clock frequency increases, and a laser beam source cannot flow the rising and falling edge. Since such a 2T cycle pattern is pre-formatted together with the normal 1T cycle pattern, the applied linear velocity range can be widened, and improved compatibility or matching in an arbitrary combination with an optical information recording apparatus can be realized by the minimum amount of pre-formatted information. On the optical information recording apparatus side in which the optical information recording medium is loaded, recording in a high-velocity range which is difficult to be performed by the normal 1T cycle pattern can be realized by using the 2T cycle pattern in an apparatus of the same specifications. Thus, it suppresses an optical information recording apparatus from becoming an old-model and product life is prolonged.

In a fourth aspect of the optical information recording medium of the present invention, considering the third aspect, the 1T cycle pattern is a multipulse pattern of which applied linear velocity range is fixed to a specific linear velocity.

Therefore, the invention can be suitably applied also to a case of a combination of the applied linear velocity range of the 1T cycle pattern, which is fixed to 19.2 m/s (corresponding to 16× of reproduction of a CD-ROM) and the applied linear velocity range of the 2T cycle pattern from 9.6 m/s (corresponding to 8× of reproduction of a CD-ROM) to 28.8 m/s (corresponding to 24× of reproduction of a CD-ROM).

In a fifth aspect of the optical information recording medium of the present invention, considering the first to fourth aspects, the pre-formatted information is encoded with a wobble of the guide groove.

Therefore, at the time of pre-formatting parameters (recording conditional information), the conventional wobble encoding method can be utilized and the first, third, and fourth aspects can be easily realized.

According to a sixth aspect of the optical information recording medium of the present invention, considering the fifth aspect, the pre-formatted recording conditional information is encoded using frequency modulation of the wobble.

Therefore, the invention can be suitably applied to a so-called rewritable optical information recording medium such as a CD-RW.

According to a seventh aspect of the optical information recording medium of the invention, considering the fifth aspect, the pre-formatted recording conditional information is encoded using phase modulation of the wobble.

Therefore, the invention can be suitably applied to a so-called rewritable optical information recording medium such as a DVD+RW.

According to an eighth aspect of the optical information recording medium of the present invention, considering the fifth to seventh aspects, the pre-formatted recording conditional information is encoded in a lead-in area on the optical information recording medium.

As a consequence, reliable read-out of the parameters (recording conditional information) can be achieved utilizing the lead-in area, which is usually accessed by an information recording apparatus to obtain characteristic information of a disc, as a pre-formatted area.

In a ninth aspect of the optical information recording medium of the present invention, considering the fifth to seventh aspect, the pre-formatted information is encoded in either a part on the inner radius side of an information recording area, or a part on the inner radius side of a test recording area, on the optical information recording medium.

Consequently, even when the lead-in area is an insufficient in the capacity of information amount with respect to information amount to be recorded, the problem can be addressed without disturbing the information recording area.

In a tenth aspect of the optical information recording medium of the invention, considering the fifth to seventh aspects, the pre-formatted recording conditional information is encoded in either a part on the outer radius side of an information recording area and on the outer radius side of a lead-out area, or, an area on the outer radius side of a test recording area in the outer peripheral part, on the optical information recording medium.

Consequently, even when the lead-in area is insufficient in the capacity of information amount with respect to information to be recorded, the problem can be addressed without disturbing the information recording area.

In an eleventh aspect of the optical information recording medium of the present invention, considering the first to fourth aspects, the pre-formatted information is encoded in a part of an information recording area on the optical information recording medium.

Therefore, the recording conditional information can be pre-formatted at an arbitrary time point even on an existing optical information recording medium.

In a twelfth aspect of the optical information recording medium of the present invention, considering the first to fourth aspects, the pre-formatted information is written as code in a part of a surface of the optical information recording medium.

Consequently, the recording conditional information can be additionally preformatted even onto an existing optical information recording medium.

According to a first aspect of the method for determining a recording condition of the present invention, the process comprises the steps of reading a pre-formatted recording conditional information from the optical information recording medium according to the invention, which is loaded in an optical information recording apparatus;

comparing the pre-formatted recording conditional information on the optical information recording medium with recording conditional information of the optical information recording apparatus regarding performances including recordable linear velocity;

selecting a recording conditional information satisfying a desired optimum condition based on the result of comparing; and generating a multipulse pattern used for specifying a light emission waveform of a laser beam, based on the selected recording conditional information characterised in that one of the multipulse patterns is a 1T cycle pattern including a part where the combination of the heating pulse and the cooling pulse is set as a 1T cycle, and

another one of the multipulse patterns is a 2T cycle pattern including a part where the combination of the heating pulse and the cooling pulse is set as a 2T cycle, and the information includes a first linear velocity range for a 1T cycle and a second linear velocity range for a 2T cycle.

In the method, the determined (selected) recording condition refers to a recording strategy which determines a light emission waveform of the laser beam, a liner velocity and the like.

At the time of recording, erasing, or rewriting information to the optical information recording medium of the present invention, by obtaining the recording conditional information from the optical information recording medium and comparing it with recording conditional information of the optical information recording apparatus regarding performances including recordable linear velocity, the optical information recording apparatus can select and set the recording condition satisfying a desired optimum condition in accordance with its performances. Thus, recording, erasing, or rewriting of information can be efficiently realized in an arbitrary combination between an optical information recording medium and an optical information recording apparatus of the same recording method, and compatibility or matching in the arbitrary combination between the optical information recording medium and the optical information recording apparatus is improved.

According to a second aspect of the method for determining a recording condition of the present invention, considering the first aspect, the process further comprises the step of performing test recording to the optical information recording medium based on parameters of test recording, which is also pre-formatted as the a part of the recording conditional information, corresponding to the selected multipulse pattern so as to determine a light emission power of the heating pulse in accordance with the result thereof.

In actual determination of a recording condition, test recording for setting an optimum light emission power of the laser beam is often performed. Since the parameters of the test recording corresponding to each of the multipulse patterns are also pre-formatted as recording conditional information, by performing a test recording process according to a selected multipulse pattern, an aliquant light emission power can be determined.

In a third aspect of the method for determining a recording condition of the present invention, considering the first and second aspects, the process further comprises the step of performing a test recording onto a test recording area of the optical information recording medium based on the selected recording conditional information so as to make a final determination of a desired optimum condition based on the result of propriety of signal characteristics of the recorded recording mark.

Since the recording condition is finally determined based on a result of an actual test recording, an excellent recording, erasing, or rewriting operation can be performed.

In a fourth aspect of the method for determining a recording condition of the present invention, considering the first to third aspects, the desired optimum condition is a condition realizing the highest liner velocity among recordable conditions selected based on the result of comparing.

The desired optimum condition is satisfied by a condition realizing the highest linear velocity among recordable conditions in comparison between the pre-formatted recording conditional information and recording conditional information of the optical information recording apparatus. To set the desired optimum condition as a mode of realizing improved compatibility or matching in an arbitrary combination between an optical information recording medium and an optical information recording apparatus, the recording operation at a speed as high as possible is allowed to be performed. The present invention can be suitably applied to an external memory device or the like of a computer.

According to a fifth aspect of the method for determining a recording condition of the present invention, considering the first to third aspects, the desired optimum condition is a condition realizing the highest liner velocity among recordable conditions selected based on the result of comparing, under the condition of using a specific multipulse pattern.

Therefore, information can be recorded at a speed as high as possible by also using an existing optical information recording apparatus adapted only to one type of multipulse pattern (for example, a drive of an old generation). Consequently, even a new optical information recording medium can be recorded by an existing optical information recording apparatus if the recordable linear velocity ranges overlap each other. Thus, the product life of the optical information recording apparatus can be prolonged.

According to a sixth aspect of the method for determining a recording condition of the present invention, considering the first to third aspects, the desired optimum condition is any recordable condition selected based on the result of comparing, under the condition of using a specific liner velocity.

Consequently, information can be recorded by also using an existing optical information recording apparatus adapted to only one type of multipulse pattern and one linear velocity (for example, an apparatus like a video recorder). Therefore, with respect to the optical information recording apparatus, one certain type of an optical information recording medium can be used for a video recorder and a drive, and product life of the optical information recording apparatus can be prolonged.

According to a seventh aspect of the method for determining a recording condition of the present invention, considering the first to third aspects, the desired optimum condition is a condition realizing the highest stability among recordable conditions selected based on the result of comparing.

The desired optimum condition is satisfied by a condition by which becomes the most stable among recordable conditions selected based on the result of comparing between the pre-formatted recording conditional information and the recording conditional information of the optical information recording apparatus. The desired optimum condition therefore enables a quality of recording operation as high as possible close to, for example, a reproduction speed to be performed as a form of improving compatibility or matching in an arbitrary combination between an optical information recording medium and an optical information recording apparatus. The invention can be suitably applied to recording of graphic data or the like.

According to a first aspect of the optical information recording apparatus of the present invention, there is provided an optical information recording apparatus for recording information onto an optical information recording medium by irradiating the medium with a laser beam in accordance with PWM in which duration of a recording mark is expressed by "nT" which is "n" times of a basis clock period "T" (n expresses nonnegative integer). The first aspect of the optical information recording apparatus comprises,

a rotation controller configured to rotate the optical information recording medium according to the invention, disposed thereon;

a light source configured to irradiate a laser beam to the optical information recording medium;

a light source driver configured to induce an emission of the light source;

a reader configured to read pre-formatted recording conditional information from the optical recording information medium;

a comparing mechanism configured to compare the pre-formatted read recording conditional information, with recording conditional information of the optical recording information apparatus regarding performances including recordable linear velocity;

a selecting mechanism configured to select a recording condition satisfying a desired optimum condition based on the result of comparing by the comparing mechanism;

a pulse pattern generator configured to generate a multipulse pattern used for an emission of the light source, based on the selected recording condition;

an emission waveform controller configured to set a recording strategy which determines a light emission waveform of the laser beam based on the generated multipulse pattern by the pulse pattern generator, and to control the light source driver by the recording strategy; and

a speed controller configured to control a relative sweep speed between the optical information recording medium rotated by the rotation controller and the laser beam irradiated to the optical information recording medium, based on linear velocity of the recording conditional information selected by the selecting mechanism characterised in that one of the multipulse patterns is a 1T cycle pattern including a part where the combination of the heating pulse and the cooling pulse is set as a 1T cycle, sand

another one of the multipulse patterns is a 2T cycle pattern including a part where the combination of the heating pulse and the cooling pulse is set as a 2T cycle, and the information includes a first linear velocity range for a 1T cycle and a second linear velocity range for a 2T cycle.

Therefore, at the time of recording, erasing, or rewriting information to an optical information recording medium in which parameters of a plurality of multipulse patterns in different applied linear velocity ranges and information of linear velocities at which information can be recorded on the optical information recording medium with each of the multipulse patterns is pre-formatted as recording conditional information, by obtaining the recording conditional information from the optical information recording medium and comparing it with recording conditional information of the optical information recording apparatus regarding performances including recordable linear velocity information, the apparatus can select and set the recording condition satisfying a desired optimum condition in accordance with its performances. Thus, recording, erasing, or rewriting of information can be maximally performed in an arbitrary combination between an optical information recording medium and an optical information recording apparatus of the same recording method, and compatibility or matching in an arbitrary combination between the optical information recording medium and the optical information recording apparatus is improved.

According to a second aspect of the optical information recording apparatus of the present invention, considering the first aspect, the apparatus further comprises a test recording mechanism configured to perform a test recording to the optical information recording medium of the present invention based on parameters of a test recording, which is pre-formatted on the optical information recording medium as a part of the recording conditional information, corresponding to a multipulse pattern of the selected recording conditional information by the selected mechanism, so as to determine a light emission power of the heating pulse.

In actual determination of a recording condition, test recording for setting an optimum light emission power of the laser beam is often performed. Since the parameters of the test recording corresponding to each of the multipulse patterns is also pre-formatted as a part of the recording conditional information, by performing a test recording process according to the selected multipulse pattern, an adequate light emission power can be determined.

According to a third aspect of the optical information recording apparatus of the present invention, considering the first and second aspects, the apparatus further comprises a final determination mechanism configured to finally determine a desired optimum condition based on the result of proprieties of single characteristic of the resulted recording mark by the test recording mechanism.

Since the recording condition is finally determined based on a result of an actual test recording, excellent recording, erasing, or rewriting operation can be performed.

According to a fourth aspect of the optical information recording apparatus of the present invention, considering the first to third aspects, the desired optimum condition is a condition realizing the highest liner velocity among recordable conditions based on the result of comparing by the comparing mechanism.

Therefore, the desired optimum condition is satisfied by a condition realizing the highest linear velocity among recordable conditions selected based on the result of comparing between the recording conditional information of the optical information recording medium and the recording conditional information of the optical information recording apparatus, thereby realizing improved compatibility or matching in an arbitrary combination between an optical information recording medium and an optical information recording apparatus and allowing the recording operation to be performed at a speed as high as possible. The invention can be suitably applied to an external memory device or the like of a computer.

According to a fifth aspect of the optical information recording apparatus of the present invention, considering the first to third aspects, the desired optimum condition is a condition realizing the highest liner velocity among recordable conditions based on the result of comparing by the comparing mechanism, under the condition of using a specific multipulse pattern.

Therefore, information can be recorded at a speed as high as possible by also using an existing optical information recording apparatus adapted only to one type of multipulse pattern (for example, a drive of an old generation). Consequently, even a new optical information recording medium can be recorded by an existing optical information recording apparatus if the recordable linear velocity ranges overlap each other. Thus, the product life of the optical information recording apparatus can be prolonged.

According to a sixth aspect of the optical information recording apparatus of the present invention, considering the first to third aspects, the desired optimum condition is any recordable condition selected based on the result of comparing by the comparing mechanism, under the condition of using a specific liner velocity.

Consequently, information can be recorded by also using an existing optical information recording apparatus adapted to only one type of multipulse pattern and one linear velocity (for example, an apparatus like a video recorder). Therefore, with respect to the optical information recording apparatus, one kind of an optical information recording medium can be used for a video recorder and a drive, and product life of the optical information recording apparatus can be prolonged.

According to a seventh aspect of the optical information recording apparatus of the present invention, considering the first to third aspects, the desired optimum condition is a condition realizing the highest stability among recordable conditions selected base on the result of comparing by the comparing mechanism.

Therefore, a desired optimum condition is satisfied by a condition by which becomes the most stable among recordable parameters in comparison between recording conditional information of the optical information recording medium and recording conditional information of the optical information recording apparatus. The desired optimum condition therefore enables a recording operation of quality as high as possible in a state close to a reproduction speed to be performed while improving compatibility or matching in an arbitrary combination between an optical information recording medium and an optical information recording apparatus. The invention can be suitably applied to recording of graphic data or the like.

An information processing apparatus of the present invention has an optical information recording apparatus of the present invention therein.

Since the information processing apparatus has the optical information recording apparatus therein, recording, erasing, or rewriting of information can be maximally performed in an arbitrary combination with an optical information recording medium of the same recording method, and compatibility or matching in an arbitrary combination with an optical information recording medium is improved. Particularly, by allowing the recording operation to be performed as fast as possible, the optical information recording apparatus can be suitably used as an external memory device of a computer.

BRIEF DESCRIPTION OF THE DRAWINGS

FIG. 1 is a pulse waveform chart showing an example of a 1T cycle pattern in an embodiment of the present invention.

FIG. 2 is a pulse waveform chart showing another example of the 1T cycle pattern.

FIG. 3 is a pulse waveform chart showing an example of a 2T cycle pattern where "n" is an even number.

FIG. 4 is a pulse waveform chart showing an example of the 2T cycle pattern where "n" is an odd number.

FIG. 5 is a schematic cross sectional view showing an example of principle structure of the optical information recording medium of the present invention.

FIG. 6 is a plan view showing assignment of regions of the optical information recording medium of the present invention.

FIG. 7 is a cross sectional view showing an example of the structure of the optical information recording medium of the present invention.

FIG. 8 is an explanatory diagram showing a data format of a 1ATIP frame.

FIG. 9 is a schematic block diagram showing an example of the configuration of the optical information recording apparatus of the present invention.

FIG. 10 is a schematic flowchart showing an example of process from determination of recording conditions to recording operation.

FIG. 11 is a schematic flowchart showing a concrete process example.

FIG. 12 is a perspective view of an appearance showing an example of applying the invention to the information processing apparatus of the present invention.

DESCRIPTION OF THE PREFERRED EMBODIMENTS

Embodiments of the present invention will be described with reference to the drawings.

The embodiments of the present invention are suitably applied to an optical information recording process, especially a method for determining a recording condition, and an optical information recording apparatus (including an optical information reproducing apparatus) for an optical information recording medium capable of recording, erasing or rewriting information by modulating intensity of irradiation light, particularly, a phase-change optical information recording medium.

Information recording on the optical information recording medium is carried out by irradiating and sweeping an intensity-modulated light beam, thereby generating a recording marks. The recording marks are formed on a recording layer within the medium, and exhibit a different optical property compared with non-marked area on the recording layer by irradiation of a light. The optical information recording apparatus and the optical information reproducing apparatus reproduce the information by utilizing the differences of the optical properties between the recording marks and the non-marked area. The state of the recording mark varies depending on the kind of material of the recording layer. In the case where the material of the recording layer is a magnetic material, recording marks have a different magnetic orientation from the non-marked area. In the case of a phase-change material, recording marks have a different phase from the non-marked area. In an optical information recording medium using a phase-change material as a rewritable optical information recording medium which is the most common at present, a material having a crystalline phase and an amorphous phase is used as the material of a recording layer. The materials of the phase-change recording layer include an SbTe alloy, a GeSbTe alloy, an AgInSbTe alloy, and GaGeSbTe alloy. Within the materials of the phase-change recording layer, the optical characteristics of the crystalline phase and the amorphous phase are significantly different from each other, so that information can be recorded by generating a mark of the amorphous phase in the crystalline phase. In the case where reversible phase transition occurs between the crystalline phase and the amorphous phase, a rewritable optical information recording medium is obtained.

[Optical information recording process]

An amorphous phase mark is formed in the crystalline phase by irradiating and weeping condensed light to the recording layer or a portion near the recording layer. At this time, an intensity-modulated light beam is emitted as described above.

In the optical information recording process of the embodiment, information is recorded by a method of modulating the length of a recording mark and the length of a space between recording marks ( also referred to a mark length modulation method hereinafter), which is an application of PWM (Pulse Width Modulation) to an optical information recording medium. According to the optical information recording process, the length of a recording mark and the length of a space between the marks are controlled on the unit basis of a basic clock period "T", thereby enabling information to be recorded. One of the distanced features of the optical information recording process using the mark length modulation method is a higher recording density than that of a mark position modulation method which is one of a recording methods of an optical information recording medium. Moreover, the mark length modulation method is the modulation method employed for an optical disc such as EFM employed for a CD or a DD (Double Density) CD and EFM+ employed for a DVD. In the mark length modulation method, it is important to accurately control the recording mark length and the length of a space between recording marks (also referred to space length hereinafter). According to the mark length modulation method, each of the recording mark length and the space length has the length equivalent to time duration of "nT" ("n" expresses nonnegative integer) with respect to the basic clock period "T".

In the case of performing recording in accordance with PWM, as a recording pulse used for recording, erasing, or rewriting a "0" signal (space), whose duration after modulation is nT, continuous light at the power level Pe is used.

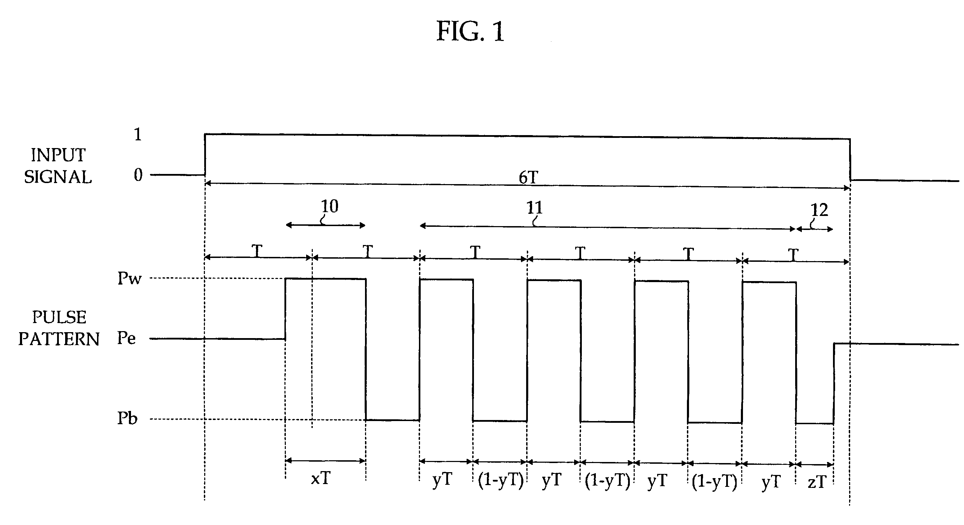

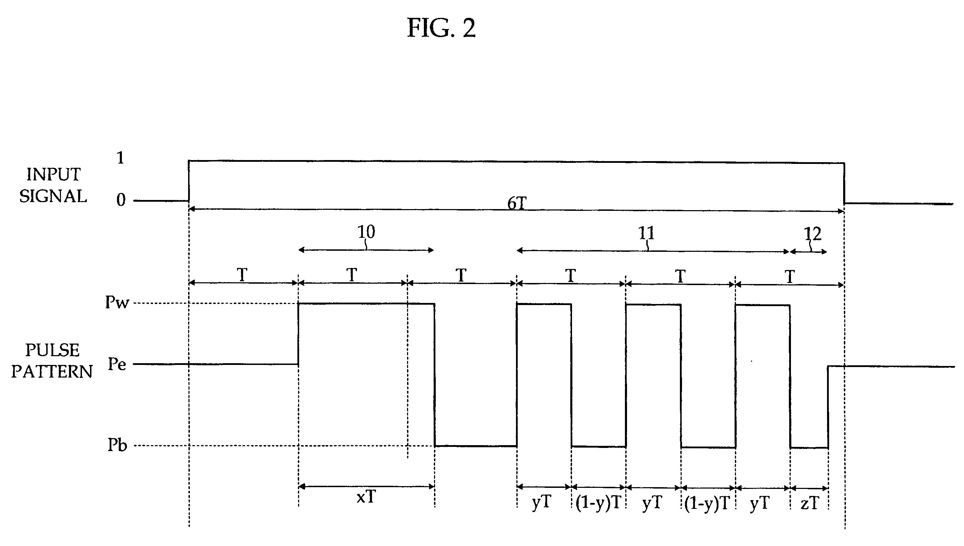

Some examples of the pattern of recording pulses at the time of recording, erasing, or rewriting a "1" signal (recording mark) whose duration after modulation is "nT" will be described. FIGs. 1 and 2 show examples of a 1T cycle pattern adapted to low-speed recording which is a multipulse pattern of a laser beam. The pattern is constructed by: a front-pulse part "1" at the power level Pw for heating pulses with duration xT; a 1T cycle multipulse part "2" having total (n-n') high-level pulses at the power level Pw each with duration yT and low-level pulses at the power level Pb for cooling pulses each with duration (1-y)T between the high-level pulses; and an end-pulse part "3" at the power level Pb with duration zT. "n" and "n' " are positive integers satisfying the relation of "no n", and the power levels satisfy the relation of "Pw > Pe > Pb". FIG. 1 shows an example of the case where "n = 6" and "n' = 2". FIG. 2 shows an example of the case where "n = 6" and "n' = 3".

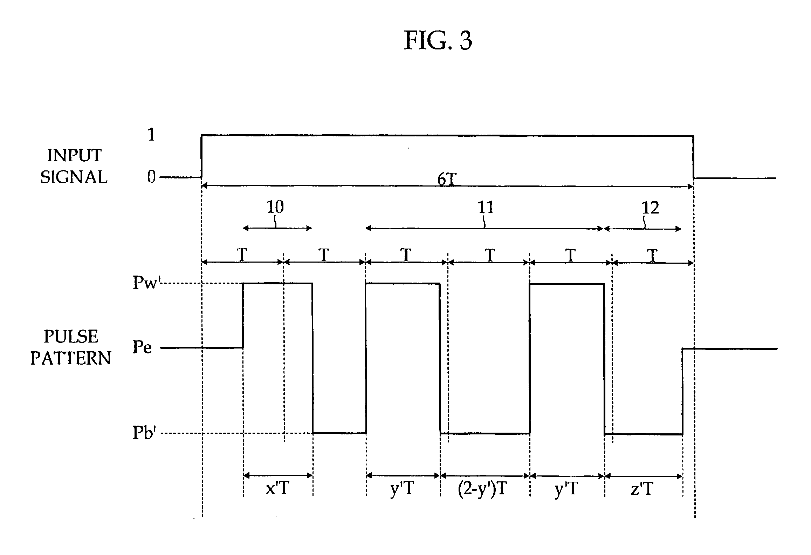

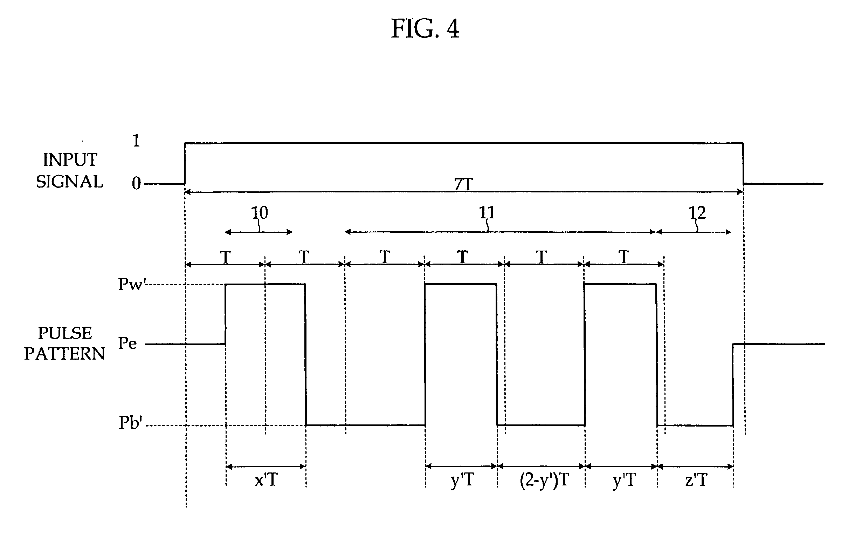

Another example of the pattern of a recording pulse is a 2T cycle pattern adapted to high-speed recording. As shown in FIGs. 3 and 4, deferent patterns are used in combination corresponding to each of the time when "n" is an odd number and the time when "n" is an even number. When "n" is an even number, a pattern is a multipulse pattern of a laser beam, which is constructed by: a front pulse part "1" at the power level Pw' for heating pulse with duration x'T; a multipulse part of 2T cycles "2" having total ((n/2)-1) high-level pulses at the power level Pw' each with duration y'T and a low-level pulse at the power level Pb' for cooling pulse with duration (2-y')T between the high-level pulses; and an end pulse part "3" at the power level Pb' with duration z'T. The power levels satisfy the relation of "Pw' > Pe > Pb' ". When "n" is an odd number, a multipulse pattern is used in which the multipulse part is a multipulse part of 2T cycles having total (((n-1)/2)-1) high-level pulses each with duration y'T and a low-level pulse with duration (2-y')T between the high-level pulses. FIG. 3 shows an example of the case where "n = 6 (even number)". FIG. 4 shows an example of the case where "n = 7 (odd number)".

Such a 2T cycle pattern is a multipulse pattern adapted to high-speed recording created to address a problem that when linear velocity of recording using a multipulse pattern with a laser beam increases, the basic clock frequency becomes high and on/off time of a laser beam source cannot follow the speed. Therefore, those multipulse patterns of different types can be applied to optical information recording media of the same configuration. However, a recordable linear velocity range varies. In other words, the 1T cycle pattern and the 2T cycle pattern are the plurality of multipulse patterns in different linear velocity ranges. In the multipulse patterns of different types, even for optical information recording media of the same configuration, not only the linear velocity range but also the coefficient (x, x', y, y', z, and z' in the above examples) of the optimum pulse width at each recording linear velocity and the optimum power level (Pw, Pw', Pe, Pb, and Pb in the above examples) vary.

Therefore, by pre-formatting parameters of both of the 1T cycle pattern and 2T cycle pattern together with the linear velocity ranges as recording conditional information onto optical information recording media of the same configuration, the recording conditional information can be provided to an optical information recording apparatus into which the optical information recording medium is loaded and can be used for a method for determining a recording condition which will be described later.

[Optical information recording medium]

A feature of the embodiment is that recording conditional information of at least the 1T cycle pattern and the 2T cycle pattern, as a plurality of multipulse patterns having different applied linear velocity ranges, is pre-formatted on an optical information recording medium.

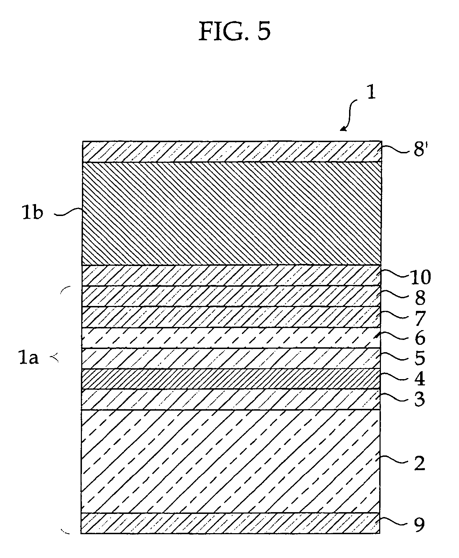

Prior to pre-formatting, a multilayer structure or the like of an optical information recording medium "1" suitable for the embodiment will be described with reference to FIG. 5. As a basic configuration, on a transparent substrate "2" having concentric-circle or spiral guide grooves, a lower protection layer "3", a phase-change recording layer "4", an upper protection layer "5", a reflection layer "6", and an overcoat layer "7" are stacked. Further, a print layer "8" may be provided on the overcoat layer "7", and a hard coat layer "9" may be provided on a face of the substrate to where light is irradiated.

Such single-plate disk "1a" may be bonded to another disk, a layer or the like via a bonding layer "10". A disk "1b" to be bonded via the bonding layer "10" may be the same single-plate disk or a transparent substrate. It is also possible to bond the disk "1b" to the single-plate disk "1a via the bonding layer "10" without forming the printing layer "8" in the disk "1a" and after bonding these disks, a printing layer "8' " is formed on a top-surface of the disk "1b".

The material of the substrate "2" is, for example, glass, ceramics, a resin, or the like. Of these, the resin is preferable from the viewpoints of moldability and cost efficiency. Examples of the resin are a polycarbonate resin, an acrylic resin, an epoxy resin, a polystyrene resin, an acrylonitrile-styrene copolymer resin, polyethylene resin, a polypropylene resin, a silicone resin, a fluororesin, an ABS resin, a urethane resin, and the like. Among them, a polycarbonate resin and an acrylic resin are preferable from the viewpoint of excellent moldability, excellent optical properties, and cost efficiency.

As the material of the phase-change recording layer "4", a phase-change recording material containing Sb and Te, which generates a phase-change between the crystalline phase and the amorphous phase and each of which can be in a stabilized state or a metastable state, is preferable from the viewpoints of excellent recording (amorphous) sensitivity and speed, erasing (crystallization) sensitivity and speed, and a desirable erasing ratio. By adding an element such as Ga, Ge, Ag, In, Bi, C, N, O, Si, or S to the SbTe material, recording/erasing sensitivity, signal characteristics, reliability, and the like can be improved. It is therefore desirable to control the optimum recording linear velocity by adjusting the composition ratio of elements or materials to be added in order to obtain a target recording linear velocity or a target linear velocity range, as well as to assure reproduction stability of a recorded signal and the life (reliability) of a signal. In the phase-change optical information recording medium "1" used in the embodiment, the material of the phase-change recording layer, which comprehensively satisfies the above-described characteristics, includes Ag and/or Ge, Ga and/or In, Sb, and Te as constituent elements. It is desirable that the composite ratio of the elements, namely $(Ag \text{ and/or } Ge)_\alpha (Ga \text{ and/or } In)_\beta Sb_\gamma Te_\delta$ (where $\alpha$, $\beta$, $\gamma$, and $\delta$ express % by atom) satisfies the following relations:

$$0 < \alpha \leq 6$$

$$2 \leq \beta \leq 10$$

$$60 \leq \gamma \leq 85$$

$$15 \leq \delta \leq 27$$

where

$$\alpha + \beta + \gamma + \delta = 100.$$

The material including the elements with above ration is preferable from the viewpoints of high signal reproduction stability and a long signal life.

The film thickness of the phase-change recording layer "4" is 10 nm to 50 nm and, and preferably 12 nm to 30 nm. Furthermore, considering initial characteristics such as jitter, overwrite characteristics, and mass productivity, the film thickness is more preferably 14 nm to 25 nm. When the film thickness is less than 10 nm, light absorption capability deteriorates considerably hence the role of a recording layer cannot be played. When the film thickness is more than 50 nm, a high-speed and uniform phase-change do not easily occur. The phase-change recording layer "4" can be formed by various vapor phase epitaxy methods such as vacuum evaporation, sputtering, plasma CVD, photo CVD, ion plating, and electron beam deposition. Among them, sputtering is excellent from the viewpoints of mass productivity, film quality, and the like.

The protection layers "3" and "5" are formed on and under the phase-change recording layer "4". Examples of the material of the protection layers "3" and "5" are metal oxides such as $SiO$, $SiO_2$, $ZnO$, $SnO_2$, $Al_2O_3$, $TiO_2$, $In_2O_3$, $MgO$, $ZrO_2$ and the like; nitrides such as $Si_3N_4$, $AlN$, $TiN$, $BN$, $ZrN$ and the like; sulfides such as $ZnS$, $In_2S_3$, $TaS_4$ and the like; carbons and diamond carbons such as $SiC$, $TaC$, $BC$, $WC$, $TiC$, $ZrC$ and the like; mixtures thereof, and the like. Each of the materials or a mixture of any of the materials may be used for the protection layer. As necessary, an impurity may be added. The protection layer may be a single layer, or a multilayer having two or more layers. The melting point of the protection layer is higher than that of the phase-change recording layer. The protection layers "3" and "5" can be formed by various vapor phase epitaxy methods such as vacuum evaporation, sputtering, plasma CVD, photo CVD, ion plating, and electron beam deposition. Among them, sputtering is excellent from the viewpoints of mass productivity, film quality, and the like.

The film thickness of the lower protection layer "3" exerts a large influence on reflectance, modulation degree, and recording sensitivity. To obtain excellent signal characteristics, the thickness of the lower protection layer is 60 nm to 120 nm. The thickness of the upper protection layer "5" is preferably 5 nm to 45 nm, and more preferably 7 nm to 40 nm. When the thickness is less than 5 nm, the film loses the function of a heat-resistive protection layer and recording sensitivity thereof deteriorates. On the other hand, when the thickness is more than 45 nm, interface peeling tends to occur and repetitive recording performance also deteriorates.

The reflection layer "6" may be made of a metal material such as Al, Au, Ag, Cu, Ta, Ti, or W or an alloy containing any of these elements. To improve corrosion resistance, thermal conductivity, and the like, an element such as Cr, Ti, Si, Cu, Ag, Pd, or Ta may be added to the metal material. The addition ratio is suitably 0.3 % by atom to 2 % by atom. If the ratio is lower than 0.3 % by atom, corrosion resistance is insufficient. If the ratio is higher than 2 % by atom, thermal conductivity overly decreases hence it becomes difficult to set an amorphous state. Such a reflection layer 6 can be formed by various vapor phase epitaxy methods such as vacuum evaporation, sputtering, plasma CVD, photo CVD, ion plating, and electron beam deposition. The film thickness of an alloy or metal layer as the reflection layer is set to 50 nm to 200 nm, and preferably 70 nm to 160 nm. The alloy or metal layer may be formed as a multilayer. In the case of forming a multilayer, the thickness of each layer has to be at least 10 nm. Total thickness of the multilayer is preferably 50 nm to 160 nm.

On the reflection layer "6", for preventing the reflection layer "6" from being oxidized, the overcoat layer "7" is formed. The overcoat layer "7" is generally formed of an ultraviolet curing resin by spin coating. The preferable thickness of the overcoat layer "7" is 3 $\mu$m to 15$\mu$m. When the thickness is less than 3 $\mu$m, in the case of providing the printing layer "8" on the overcoat layer "7", increase in error may be recognized. On the other hand, when the thickness is more than 15 $\mu$m, internal stress may increase and it may exert a large influence on the mechanical characteristics of the disk.

The hard coat layer "9" is generally formed of an ultraviolet curing resin by spin coating. The preferable thickness of the hard coat layer "9" is 2 $\mu$m to 6 $\mu$m. If the thickness is less than 2 $\mu$m, sufficient scratch-proof property cannot be obtained. On the other hand, if the thickness is more than 6 $\mu$m, internal stress may increase and it may exert a large influence on the mechanical characteristics of the disk. The preferable hardness thereof may be "H" or harder, in terms of the pencil hardness, at which a large scratch will not be made even the hard coat layer is scrubbed with cloth. It is also effective to mix a conductive material as necessary to prevent charging and adhesion of dusts and the like.

The printing layer "8" is provided to assure scratch-proof property, print a label such as a brand name, form an ink reception layer for an ink jet printer, and the like. Generally, the printing layer "8" is formed of an ultraviolet curing resin by screen printing. The preferable thickness of the printing layer "8" is 3 $\mu$m to 50$\mu$ m. When the thickness is less than 3 $\mu$m, unevenness may occur at the time of forming the layer. On the other hand, when the thickness is more than 50 $\mu$m, internal stress may increase and it may exert a large influence on the mechanical characteristics of the disk.

As the bonding layer "10", an adhesive such as an ultraviolet curing resin, a hot melt adhesive, a silicone adhesive or the like can be used. The material of the bonding layer "10" is applied on the overcoat layer "7" or printing layer "8" by spin coating, roll coating, screen printing, or the like depending on the material. By performing ultraviolet irradiation, heating, pressuring, or the like, the bonding layer "10" is activated and than bonded with the disk "1b". The disk "1b" may be the same single-plate disk to the disk "1a or just a transparent substrate. On the bonding face of the disk "1b" towards the desk "1a" the material of the bonding layer "10" may be applied, or may not be applied. As the bonding layer "10", a pressure sensitive adhesive sheet may also be employed. The preferable thickness of the bonding layer "10" is, although not particularly limited, 5 $\mu$m to 100 $\mu$m in consideration of applicability and hardenability of the material, and mechanical properties of the disk. The region of the bonding face is not particularly limited. In application to a DVD and/or CD compatible optical information recording medium, in order to assure bonding strength, the position of the inner radius of the bonding face is within a range of 15 mm to 40 mm radius of the center, and preferably within a range of 15 mm to 30 mm radius of the center.

Pre-formatting of the recording conditional information will now be described. As the pre-formatting, an arbitrary method can be used from a pre-pit method, a wobble encoding method, and a formatting method. The pre-pit method is a method of pre-formatting information of recording conditions by using a ROM pit in an arbitrary area on an optical information recording medium. At the time of forming a substrate, ROM pits are formed, so that mass productivity is excellent. In addition, since ROM pits are used, it is advantageous from the viewpoints of reproduction reliability and a recordable amount of information. However, the technique of forming ROM pits (that is, hybrid technique) has many problems and it is difficult to achieve pre-formatting technique with pre-pits of RW media.

The formatting method is a method to record information by using the same method to normal recording which employs an optical information recording apparatus. In this method, however, information is formatted after an optical information recording medium is manufactured, therefore it is unsuitable from the viewpoint of mass productivity. Further, pre-formatted information can be rewritten in this method, so that the formatting method is not suitable as a method of recording characteristic information of a medium.

The wobble encoding method is a method actually employed for CD-RW and DVD+RW. This method uses the technique of encoding address information of an optical information recording medium into a wobble of a groove (guide groove on the medium). As the encoding method, frequency modulation as used in ATIP of CD-RW or phase modulation as used in DVD+RW may be employed. The wobble encoding method has an advantage of excellent productivity since wobbles are formed on a wafer together with address information at the time of forming the wafer of an optical information recording medium and has an advantage of easy formation of the wafer since it is unnecessary to form special ROM pits unlike the pre-pit method.

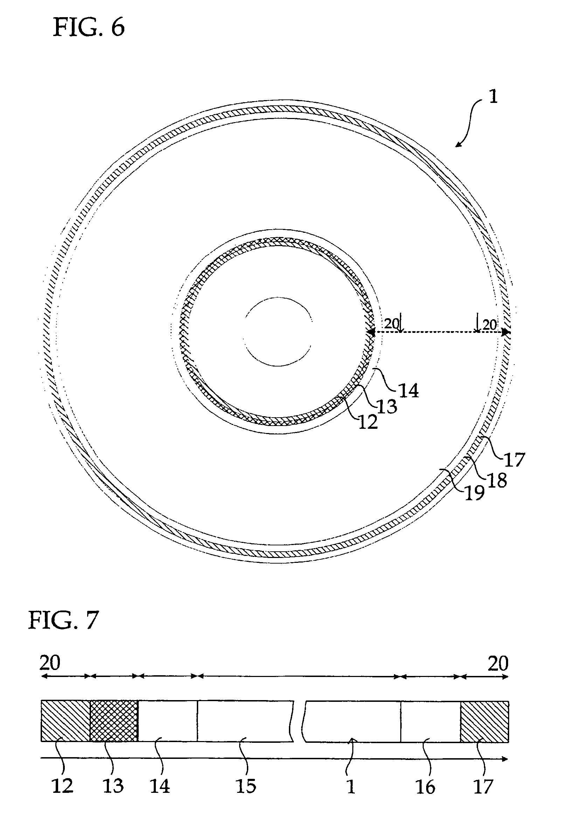

An example of pre-formatting parameters regarding a recording strategy will now be described with respect to an example of a CD-RW. Each of FIGs. 6 and 7 shows a format example of regions in the optical information recording medium "1" of the CD-RW specification. In the disc-shaped optical information recording medium "1", a groove formation area "20" in which grooves are formed, is divided into an inner-radius unassigned area "12", a test recording area "13", a lead-in area "14", an information recording area "15", a lead-out area "16", and an outer-radius unassigned area "17", in this order and in the radial direction from the inner side to the outer side.

In the case of the optical information recording medium "1" as such a CD-RW,pre-formatted media information is ATIP (Absolute Time In Pre-groove) extra information. The ATIP extra information uses ATIP indicative of address information. ATIP is the address information pre-formatted on a CD-RW disc. As disks, especially CDs, are originally designed for a music information recording medium, an address is expressed as time information of "M : S : F". "M" refers to minutes and can be expressed in the range from 00 to 99 in specification. "S" refers to seconds and can be expressed in the range from 00 to 59. "F" refers to a frame and can be expressed in the range from 00 to 74. 1 minute corresponds to 60 seconds and 1 second corresponds to 75 frames. Since each of M, S, and F carries information of 8 bits, the information amount of one AITP frame is 24 bits. Although a value in the range from 0 to 255 can be given to each of M, S, and F, the values only in the above-described ranges are used in practice. Consequently, by using unused bits, information other than an address can be added. The "ATIP extra information" utilizes the method.

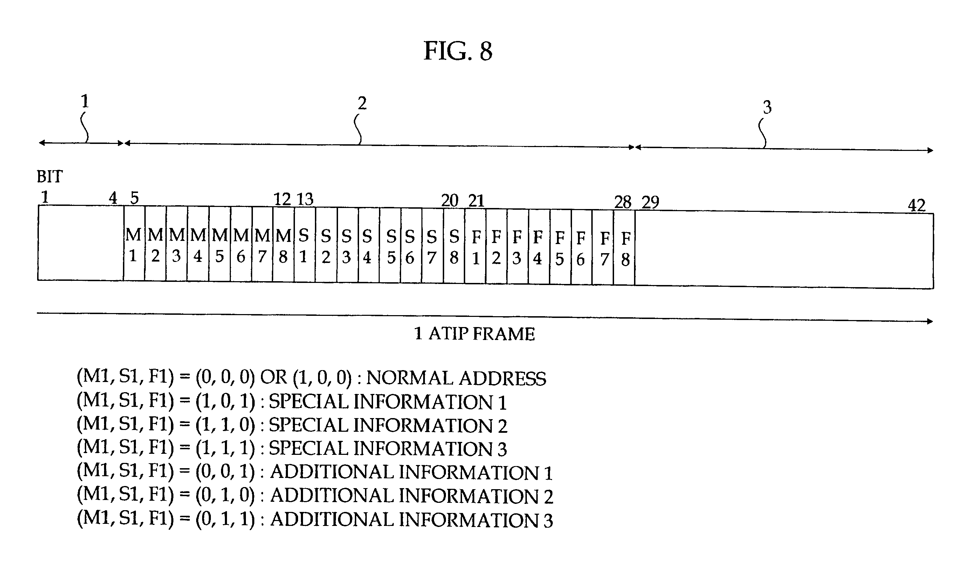

The data format of one ATIP frame consists of information of 42 bits as shown in FIG. 8. The first four bits "1" is called a sync field which is a part indicative of start of the frame. The sync field is constructed by a special pattern called a sync pattern so that an information recording apparatus recognizes the sync field as the start of a frame at the time of reproducing ATIP. 24 bits from the fifth bit to the 28th bit following the sync field, "2", denote an address field. The 24 bits are divided into three parts each consisting of 8 bits. The part from "M1" to "M8" expresses M (minutes) of address information, the part from "S1" to "S8" expresses S (seconds) of the address information, and the part from "F1" to "F8" denotes F (frame) of the address information. 14 bits from the 29th bit to the 42nd bit following the address field "3" are a field called "CIRC remainder". It corresponds to an error correction code using CIRC (Cross-Interleaved Reed Solomon Code).

In the CD-RW standard specification, by combinations of "M1" "S1", and "F1" in the address information, data in the address field is classified into the following seven types.

(M1,S1,F1) = (0,0,0) or (1,0,0) : normal address
(M1,S1,F1) = (1,0,1) : special information 1
(M1,S1,F1) = (1,1,0): special information 2
(M1,S1,F1) = (1,1,1): special information 3
(M1,S1,F1) = (0,0,1) : additional information 1
(M1,S1,F1) = (0,1,0) : additional information 2
(M1,S1,F1) = (0,1,1) : additional information 3

Among the information listed above, information other than the normal address is ATIP extra information. As the ATIP extra information, characteristic information of a disk (optical information recording medium) is given. Examples of the characteristic information of a disk (optical information recording medium) are information regarding the type of a disk (optical information recording medium), recording conditions (parameters for setting a recording power and an optimum recording power and parameters specifying a recording strategy), and the like.

The ATIP extra information is set in the lead-in area "4" on the optical information recording medium "1". One frame of the ATIP extra information is generally added following to nine frames of a normal address. That is, to reproduce six types of ATIP extra information, the lead-in area "4" of at least 60 frames has to be reproduced.

As parameters specifying a multipulse pattern (recording strategy) in the information recording process of the embodiment, with respect to two types of multipulse patterns of the 1T cycle pattern as shown in FIG. 1 and the 2T cycle pattern as shown in FIGs. 3 and 4, information is pre-formatted in the optical information medium "1". The information includes information of the coefficients x or x', y or y', and z or z' regarding the optimum pulse width at each recording linear velocity and the optimum bias power Pb or Pb' for specifying the optimum power level and information regarding linear velocity at which information can be recorded on the optical information recording medium "1" with each multipulse pattern (minimum linear velocity to maximum linear velocity, that is, recording linear velocity information) is pre-formatted on the optical information recording medium "1". The information is set, for example, as additional information 1 in the ATIP extra information.

As parameters regarding recording conditions for performing excellent recording, other than the linear velocity at which information can be recorded and the optimum pulse width of a multipulse pattern, there is also parameters of a test recording (OPC: Optimum Power Control) for determining the optimum power level Pw or Pw'. Concrete techniques of the OPC are disclosed in, for example, Japanese Patent (JP-B) Nos. 3081551 and 3124721. In the case of using techniques disclosed in the publications, when a gradient obtained by specifying the variation in a recording signal amplitude (modulation degree) "m" by the recording power "Pw" is set as "g(P)", a specific value "S" as the value of the gradient "g(P)" in the case of the recording power "Ps", a coefficient "R" to be multiplied by "Ps" to calculate the optimum recording power, a power level ratio "E" (= Pe/Pw(Pw')), a specific recording power "Pwi" which is referred to when test recording is performed while changing the power range of about $\pm$ 20% around the specific recording power as a center, and the like have to be set. In the embodiment, those parameters regarding the test recording are also pre-formatted.

Since those parameters are set for each of combinations of the recording conditions of the type of each multipulse patterns, recording linear velocity, and the like, in the case of dealing with all of multipulse patterns, the variations of parameters regarding the required recording conditions becomes numerous. However, as in the embodiment, by limiting the multipulse patterns in different linear velocity ranges to, for example, the 1T cycle pattern including the portion of the 1T cycles and the 2T cycle pattern including the portion of the 2T cycles, the variations of parameters can be decreased. Therefore, in the case of pre-formatting and recording the parameters onto the optical information recording medium "1", an amount of information to be read by the optical information recording apparatus can be reduced.

In the wobble encoding method, the absolute information amount tends to be smaller than that in the other encoding methods. Usually, a wobble frequency utilized for encoding information is set in a frequency bandwidth where mutual interference does not occur with the frequency of recording information. The wobble frequency is preferably 1/30 or less, and more preferably 1/100 or less relative to the frequency of recording information. Further, when the frequency modulation is used as the modulation method, information density deteriorates more. In the case of using redundancy of address information, the information density deteriorates further.

When the capacity of information with respect to information to be recorded becomes insufficient, a new region may be provided. In the case of a CD-RW, ATIP extra information is encoded in the lead-in area "14". If the information amount in the area is insufficient, information may be encoded in the unassigned area "12" or "17" in the disk inner or outer radius portion. Examples of the unassigned areas "12" and "17" are a portion on the inner radius side of a PCA (Power Calibration Area, that is, test recording area) and a portion on the outer radius side of the lead-out area "6".

Further, information may be pre-formatted in a part of the information recording area "15". According to the method, even on an existing optical information recording medium, the recording conditional information can be pre-formatted at an arbitrary time point.

Alternately, by writing the information as code information like a bar code or a two-dimensional code in a part of the surface of the optical information recording medium "1", the information may be pre-formatted. According to the method, the recording conditional information can be pre-formatted even on an existing optical information recording medium by attaching the code information later. However, a bar code scanner or the like is necessary to read the pre-formatted information.

As a parameter to be encoded, a value obtained by converting a real number to a binary number may be encoded or information converted by using a conversion table may be encoded. In any of the methods, however, the optical information recording apparatus needs means capable of decoding the encoded information and setting a recording strategy correctly.

In any of the cases, a pre-formatting method is suitably selected in accordance with the number of parameters necessary as information regarding recording conditions, frequency of changes, the level of difficulty as a method of fabricating the optical information recording medium "1", and the like. Among the methods, the method of inputting information by modulating wobbles in a guide groove is desirable since formation of the wafer of the optical information recording medium "1" is relatively easy.

[Optical information recording apparatus]

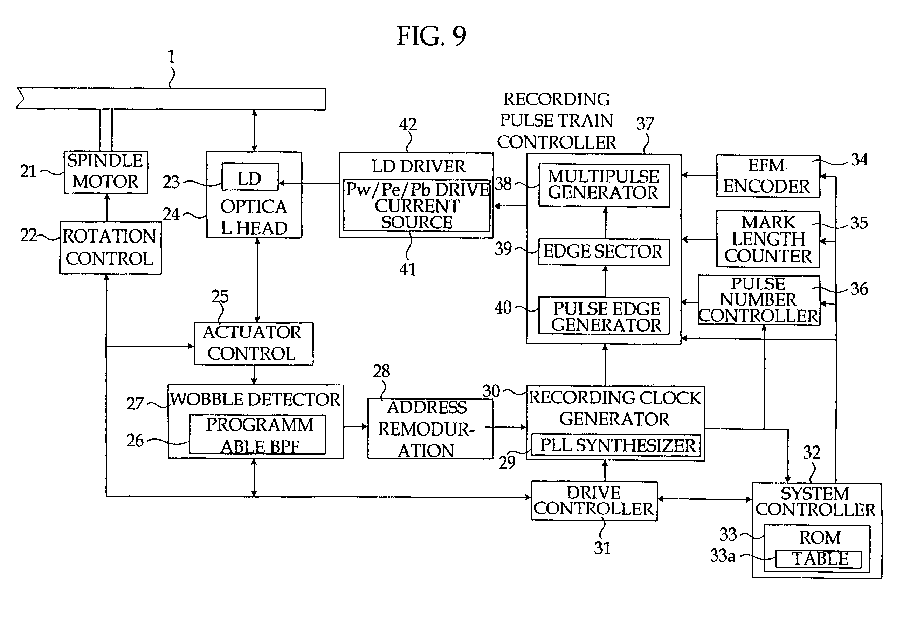

An example of the configuration of an optical information recording apparatus for realizing the above-described information recording process based on the recording condition (recording strategy) will now be described with reference to FIG. 9.

First, for the optical information recording medium "1", a rotation controller "22" including a spindle motor "21" for rotating the optical information recording medium "1" is provided, and an optical head "24" having an objective lens for condensing a laser beam onto the optical information recording medium "1" and a laser beam source such as a semiconductor laser (LD (Laser Diode)) "23" is provided so as to freely seek in the disk radial direction. To an apparatus for driving the objective lens of the optical head "24" and an output system, an actuator "25" is connected. To the actuator "25", a wobble detector "27" including a programmable BPF "26" is connected. To the wobble detector "27", an address demodulation circuit "28" for demodulating an address from a wobble signal detected is connected. To the address demodulation circuit "28", a recording clock generator "30" including a PLL synthesizer "29" is connected. To the PLL synthesizer "29", a drive controller "31" as a speed controller is connected.

To the drive controller "31" connected to a system controller "32", the rotation controller "22", the actuator "25", the wobble detector "27", and the address demodulation circuit "28" are also connected.

The system controller "32" is of a so-called microcomputer configuration including a CPU, and has a ROM "33" including a conversion table "33a" for converting encoded data. To the system controller "32", an EFM encoder "34", a mark length counter "35", and a pulse number controller "36" are connected. To the EFM encoder "34", mark length counter "35", pulse number controller "36", and system controller "32", a recording pulse pattern controller "37" as light waveform control means is connected. The recording pulse pattern controller "37" includes a multipulse generator "38" for generating a multipulse (heating pulse and cooling pulse) specified by the recording strategy, an edge selector "39", and a pulse edge generator "40".

To the output side of the recording pulse pattern controller "37", an LD driver "42" as light source driver for driving the semiconductor laser (LD) "23" in the optical head "24" by switching a driving current source "41" of each of the recording power "Pw", erasing power "Pe", and bias power "Pb" is connected.

In such a configuration, basically, to record or rewrite information on the optical information recording medium "1", the revolution of the spindle motor "21" is controlled by the rotation controller "22" under control of the drive controller "31" so that the recording linear velocity corresponds to the target recording speed. After that, an address is demodulated from a wobble signal detected and separated from a push pull signal obtained from the optical head "24" by the programmable BPF "26", and a recording channel clock is generated by the PLL synthesizer "29". To generate a recording pulse pattern by the semiconductor laser (LD) "23", the recording channel clock and EFM data as recording information is input to the recording pulse pattern controller "37". A multipulse pattern according to the recording strategy as shown in FIGs. 1, 3, and 4 is generated by the multipulse generator "38" disposed in the recording pulse pattern controller "37". By switching the drive current source "41" which is set to generate the power Pw, Pe, or Pb by the LD driver "42", an LD waveform according to the recording pulse pattern can be obtained.

In the embodiment, the multi-stage pulse edge generator "40" having resolution of 1/20 of the recording channel clock period is disposed in the recording pulse pattern controller "37". By an edge pulse input to the edge selector (multiplexer) "39" and then selected by the system controller "32", a rising edge control signal for the front pulse portion or the like is generated. A multistage delay circuit for the pulse edge generator "40" can be constructed by a high-resolution gate delay device, a ring oscillator, and a PLL circuit.

By using the rising edge control signal for the front pulse generated as described above as a reference, a multipulse pattern synchronized with the reference clock cycle T is generated on the basis of x or x', y or y', z or z', and the like.

In the recording pulse pattern controller "37" having the configuration as in the embodiment, the mark length counter "35" for measuring the mark length of an EFM signal obtained from the EFM encoder "34" is disposed. In the case of using a 2T cycle pattern as a recording strategy, a multipulse is generated via the pulse number controller "36" so that a set of pulses (an on-pulse at the power Pw and an off-pulse at the power Pb) is generated each time the mark count value increases by 2T. The operation can be performed by selecting the rear edge of a pulse for the front pulse part by the edge selector "39", selecting the front edge of the subsequent multipulse by an edge pulse generated from the next recording channel clock cycle, and selecting the rear edge of the multipulse by a pulse edge generated from the following recording channel clock cycle.

In the configuration of another multipulse generator, in the case of using a 2T cycle pattern as a recording strategy, a recording frequency-divided clock obtained by dividing the frequency of a recording channel clock by two is generated. An edge pulse is generated by using a multistage delay circuit and the front and rear edges are selected by an edge selector, thereby enabling a set of pulses (a heating pulse at the power Pw and a cooling pulse at the power Pb) to be generated each time the recording channel clock increases by 2T. In the case of this configuration, the substantial operation frequency of the multipulse generator becomes 1/2, and a higher-speed recording operation can be performed.

The optical information recording apparatus of the present invention comprises a rotation controller, a light source, a light source driver, a reader, a comparing mechanism, a selecting mechanism, a pulse pattern generator, an emission waveform controller, and a speed controller. The rotation controller corresponds to the rotation controller "22", the light source corresponds to the semiconductor laser (LD) "23", the light source driver corresponds to the LD driver "42", the reader corresponds to the optical head "24", the comparing mechanism corresponds to the system controller "32", the selecting mechanism corresponds to the system controller "32", the pulse pattern generator corresponds to the recording pulse generator "37", the emission waveform controller corresponds to the LD driver "42", and the speed controller corresponds to the drive controller "31", of the above described embodiment of FIG. 9.

[Method for determining recording condition]

An example of the method for determining recording condition of the present invention will now be described with reference to FIG. 9.

An optical information recording apparatus of the embodiment adapted to the RW optical information recording medium "1" reproduces the ATIP extra information in operation of recording data onto the optical information recording medium "1" (also including an operation of mounting the medium). Specifically, the optical information recording apparatus adapted to the RW optical information recording medium "1" is requested to be able to reproduce "additional information 1" and to have a conversion table for converting a bit to a real number. The optical information recording apparatus reproduces the "additional information 1" and obtains the value of each bit from the optical information recording medium "1". With reference to the conversion table "33a" on the basis of the bit information, the real number of the parameter can be obtained. On the basis of the real number values of the parameters, the optical information recording apparatus can set an optimum recording strategy (recording condition) in an arbitrary combination between the optical information recording apparatus and an arbitrary optical information recording medium "1".

The method for determining a recording condition of the present invention has the following steps, prior to a step of recording information on the optical information recording medium "1" which is loaded in the optical information recording apparatus, in this embodiment: reading conditional information of each of multipulse patterns pre-formatted on the optical recording medium "1"; comparing the read-out recording conditional information with the recording conditional information of the optical information recording apparatus regarding performances including recordable linear velocities; selecting a recording conditional information satisfying a desired optimum condition based on the result of comparing; and generating a multipulse pattern to be used for emitting a laser beam based on the selected recording condition.

The desired optimum conditions include:

(1) a condition realizing the highest liner velocity among recordable conditions selected based on the result of comparing the recording conditional information of the optical information recording medium "1" and the recording conditional information of the optical information recording apparatus;

(2) a condition realizing the highest liner velocity among recordable conditions selected based on the result of comparing the recording conditional information of the optical information recording medium "1" and the recording conditional information of the optical information recording apparatus, under the condition of using a specific multipulse pattern;

(3) any recordable condition selected based on the result of comparing the recording conditional information of the optical information recording medium "1" and the recording conditional information of the optical information recording apparatus, under the condition of using a specific liner velocity; and

(4) a condition realizing the highest stability among recordable condition selected based on the result of comparing the recording conditional information of the optical information recording medium "1" and the recording conditional information of the optical information recording apparatus.

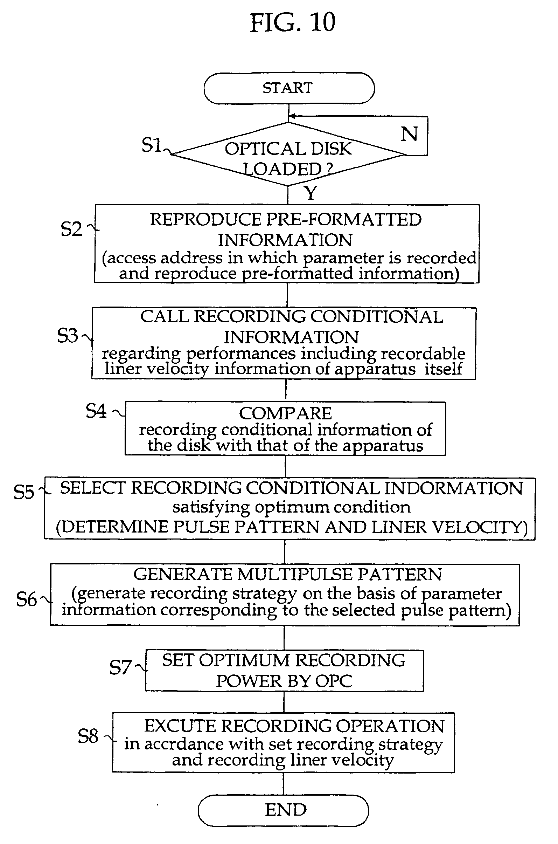

An outline of the method for determining a recording condition and the procedure to the recording operation will be described with reference to the schematic flowchart shown in FIG. 10. The process is executed by, for example, the system controller "32" in the optical information recording apparatus. First, whether the optical information recording medium "1" is inserted to the optical information recording apparatus or not, is checked (step S1) When the optical information recording medium "1" is inserted (Y in S1) prior to recording operation, the recording conditional information of each of multipulse patterns pre-formatted on the medium "1" is reproduced with the optical head "24" (S2). Specifically, the address in which the recording conditional information is recorded is accessed and the pre-formatted information is reproduced. The process of step "S2" is executed as a step of reading or the function of the reader. After the reading, the recording conditional information of the optical information recording apparatus itself regarding performance including the recordable linear velocities is called (S3). The reproduced recording conditional information of the optical information recording medium "1" is compared with that of the optical information recording apparatus (S4). On the basis of a result of the comparison, a recording conditional information satisfying a desired optimum condition which is preselected as mentioned above, is selected (S5). That is, the multipulse pattern and the recording linear velocity satisfying the desired optimum parameter are determined. The process of step "S4" is executed as a step of comparing or the function of the comparing mechanism. The process of step "S5" is executed as a step of selecting or the function of the selecting mechanism.

A recording strategy is generated and set so as to generate the optimum multipulse pattern on the basis of the pre-formatted information (parameters) corresponding to the selected multipulse pattern (S6). As necessary, each parameter is converted, for example, from bit information to real-number information by using the conversion table "33a". The process of step "S6" is executed as a step of generating or the function of the pulse pattern generator. After that, as necessary, an optimum recording power setting process is performed (S7). To be specific, the process is test recording which is performed to verify the adequacy of the set recording strategy and to set the optimum recording power. As an example of the test recording, OPC employed in a CD-R/RW and DVD+RW/R may also be used. For the OPC operation, it is sufficient to use pre-formatted information. The process of step "S7" is executed as the function of test recording mechanism. Since the recording conditions (recording linear velocity and the recording strategy) are determined by the processes, by controlling the LD driver "42" and the drive controller "31" in accordance with the recording strategy (multipulse pattern) and the recording linear velocity which are set as described above, the recording operation is actually executed (S8).

It is also possible to add a step of final determination or a function of final determination mechanism for performing test-recording on a test recording area in the optical information recording medium "1" with the selected recording conditions and, based on the result of adequacy of signal characteristics of a recording mark recorded, finally determining whether the recording condition is employed or not.

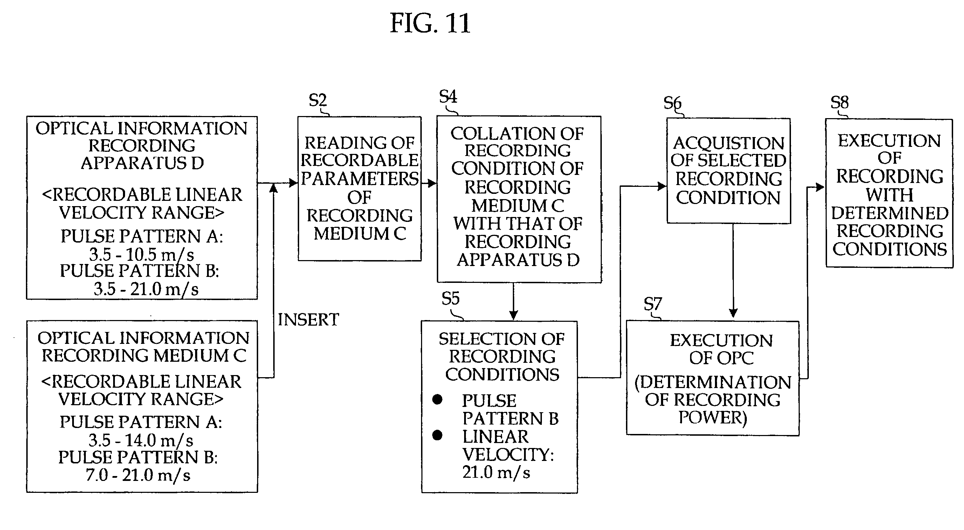

A concrete example of the method for determining a recording condition will be described with reference to FIG. 11. The following case will be assumed. A DVD-compatible phase-change optical information recording medium C is fabricated, and the phase-change optical information recording medium C has recording conditional information including two types of multipulse patterns which are a 1T cycle pattern A including the part of 1T cycles as shown in FIG. 1 and a 2T cycle pattern B including the part of 2T cycles as shown in FIGs. 3 and 4, pre-formatted therein. The recording conditional information is read from the phase-change optical information recording medium C. A recording condition is selected (determined) based on the result of comparing the recordable parameter of the phase-change optical information recording medium C and recording conditional information of the optical information recording apparatus itself regarding performance including recordable linear velocity information. Recording, erasing, or rewriting is executed by using an optical information recording apparatus D for DVD recording, which performs recording, erasing, or rewriting on the phase-change optical information recording medium C.

It is assumed that recording conditional information pre-formatted on the phase-change optical information recording medium C is set as follows. In the 1T cycle pattern A, the lowest recording linear velocity is set to 3.5 m/ s (corresponding to $1\times$ in reproduction of a DVD-ROM) and the highest recording linear velocity is set to 14.0 m/s (corresponding to $4\times$ in reproduction of a DVD-ROM). In the 2T cycle pattern B, the lowest recording linear velocity is set to 7.0 m/s (corresponding to 2x in reproduction of a DVD-ROM) and the highest recording linear velocity is set to 21.0 m/s (corresponding to 6x in reproduction of a DVD-ROM). As OPC parameters for determining coefficients x, x', y, y', z, and z' of a pulse width at the lowest and highest recording linear velocities, pulse power levels Pb and Pb', and power levels Pw, Pw', and Pe, a specific value S, a coefficient R for calculating the optimum recording power by being multiplied with Ps, power level ratio E (= Pe/Pw(Pw')), and a specific power Pwi which is referred to when test recording is performed while shifting a power range of about ± 20% of a specific power are set. As the parameters in this case, for example, parameters shown in Table 1 to be described later in an example are used.

As information of recordable recording conditions of the optical information recording apparatus D, it is assumed that a recordable linear velocity range from 3.5 to 10.5 m/s (corresponding to 1x to 3x of reproduction of a DVD-ROM) is set in the 1T cycle pattern A and a recordable linear velocity range from 3.5 m/s to 21.0 m/s (corresponding to $1\times$ to $6\times$ of reproduction of a DVD-ROM) is set in the 2T cycle pattern B.

The case where a condition of executing recording at a speed as high as possible is selected according to (1) is set as a desired optimum condition for selecting a recording method is assumed.

In a recording operation, first, when the optical information recording medium C is inserted into the optical information recording apparatus D, an operation of reading the recording conditional information which is pre-formatted on the optical information recording medium C is performed by the optical information recording apparatus D (S2). In the optical recording medium C, in the 1T cycle pattern A, the lowest recording linear velocity is 3.5 m/s and the highest recording linear velocity is 14.0 m/s. In the 2T cycle pattern B, the lowest recording linear velocity is 7.0 m/s and the highest recording linear velocity is 21.0 m/s. Consequently, it is recognized by the optical information recording apparatus D that the recordable linear velocity range of the optical information recording medium C is from 3.5 m/s to 14.0 m/s in the 1T cycle pattern and from 7.0 m/s to 21.0 m/s in the 2T cycle pattern.

After that, the read recording conditional information of the optical information recording medium C is collated with that of the optical information recording apparatus D (S4). It is determined from the collated recording conditional information that, in the combination of the optical information recording medium C and the optical information recording apparatus D, the recordable linear velocity range is from 3.5 m/s to 10.5 m/s in the 1T cycle pattern A and is from 7.0 m/s to 21.0 m/s in the 2T cycle pattern B. In the example, the case of selecting the parameters for executing recording at a speed as high as possible is assumed. Therefore, the parameter for performing recording at the linear velocity of 21.0 m/s by using the 2T cycle pattern B as the parameter of the highest recording linear velocity in the collated recording conditions is selected and set as the recording condition (S5).

Subsequently, coefficients x', y', and z' of the pulse width, the power level Pb', and OPC parameters S, R, E, and Pwi at the recording linear velocity of 21.0 m/s in the 2T cycle pattern B as the selected recording conditions are obtained, OPC is executed by using the parameters, and the power levels Pw' and Pe are determined (S6 and S7).

Finally, actually necessary data is recorded by using the recording conditions determined by the procedure (S8).

According to the method for determining a recording condition, by adjusting the setting range of recording conditions of the optical information recording apparatus and the method of selecting the recording method, recording in a wider range can be achieved. Consequently, both of, as optical information recording apparatuses, a drive handling computer data and having priority on performing recording at speed as high as possible and a video recorder for recording video data at a speed close to reproduction speed can easily handle the common optical information recording medium "1".

In an optical information recording apparatus of the same specifications, recording can be performed at a lower power level in the case of using the 2T cycle pattern B as compared with the case of using the 1T cycle pattern A. When the absolute time of pulse widths is the same, the duty ratio in the 2T cycle pattern B is the half of the duty ratio in the 1T cycle pattern A. The minimum time of the pulse width can be therefore set to the half of that of the 1T cycle pattern A with respect to the duty ratio, so that the multipulse pattern selection range is widened.

Therefore, in optical information recording apparatuses (optical pickups) having the same specifications with respect to the upper limit of the power level of the multipulse pattern and the minimum time of the pulse width, recording can be performed to a high-speed range by the 2T cycle pattern B, which is difficult to be achieved by the 1T cycle pattern A.

Consequently, as compared with an optical information recording apparatus having only the 1T cycle pattern A, an optical information recording apparatus having both the 1T cycle pattern and the 2T cycle pattern can perform recording at linear velocities of a wider range, so that the product life of the optical information recording apparatus can be increased. Even the optical information recording apparatus having only the multipulse pattern of the 1T cycle pattern A has the possibility to be adapted to high-speed recording by being assembled to a laser driving circuit capable of emitting light in the 2T cycle pattern B without changing the optical pickup configuration. Thus, the optical information recording apparatus can be recycled.

[Application Examples]

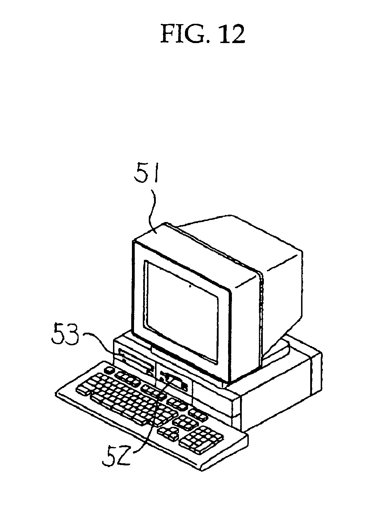

The optical information recording apparatus of the embodiment can be applied not only as a single video recorder for recording graphic data at a speed close to a reproduction speed, but also as an optical information processing apparatus such as a personal computer "51" as shown in FIG. 12. The personal computer "51" has a 3.5 FD drive "52" and an optical information recording apparatus "53" having the above-described configuration as a CD/DVD-RW drive.

Since the personal computer "51" has therein the optical information recording apparatus "53" integrally as described above, recording, erasing, or rewriting of information can be maximally performed in an arbitrary combination with the optical information recording medium "1" of the same recording method. The compatibility or matching in an arbitrary combination with the optical information recording medium "1" is improved. Particularly, by allowing the recording operation to be performed at a speed as high as possible, the optical information recording apparatus "53" can be suitably used as an external memory device of the computer.

Example 1

A DVD-compatible phase-change optical information recording medium C on which two types of multipulse patterns are pre-formatted was manufactured. The multipulse patterns are: the 1T cycle pattern A as shown in FIG. 1 including a part of 1T cycles in which the lowest recording linear velocity is 3.5 m/s (corresponding to 1× of reproduction of a DVD-ROM) and the highest recording linear velocity is 14.0 m/s (corresponding to 4× of reproduction of a DVD-ROM); and the 2T cycle pattern B as shown in FIGs. 3 and 4 including a part of 2T cycles in which the lowest recording linear velocity is 7.0 m/s (corresponding to 2× of reproduction of a DVD-ROM) and the highest recording linear velocity is 21.0 m/s (corresponding to 6× of reproduction of a DVD-ROM). Table 1 shows an example of information of pulse width, power level, and parameters of OPC (test recording) in the case of each of the multipulse patterns A and B.

Table 1

| Multipulse pattern | Recording linear velocity | | Signal width | Pulse width | | | Power level | OPC parameters | | | |
|---|---|---|---|---|---|---|---|---|---|---|---|
| | [m/s] | DVD speed | | x(x') | y(y') | z(z') | Pb(Pb') [mW] | S | R | E | Pwi [mW] |
| A | 3.5 | 1× | 3-11, 14T | 0.30 | 0.25 | 0.95 | 0.1 | 1.35 | 1.18 | 0.35 | 14.2 |
| | 14.0 | 4× | 3-11, 14T | 0.60 | 0.55 | 0.25 | 0.1 | 1.45 | 1.16 | 0.36 | 17.4 |
| B | 7.0 | 2× | 3T | 0.65 | - | 2.00 | 0.1 | 1.40 | 1.18 | 0.45 | 13.8 |
| | | | 5,7,9,11T | 0.55 | 0.40 | 1.85 | | | | | |
| | | | 4, 6, 8, 10, 14T | 0.45 | 0.35 | 1.20 | | | | | |
| | 21.0 | 6× | 3T | 1.65 | - | 0.65 | 0.1 | 1.55 | 1.14 | 0.47 | 17.0 |
| | | | 5, 7, 9, 11T | 1.30 | 1.15 | 0.55 | | | | | |
| | | | 4, 6, 8, 10, 14T | 1.20 | 1.15 | 0.35 | | | | | |

The optical information recording medium C was inserted into an optical information recording apparatus D for DVD recording (a test drive manufactured by Ricoh Company, Ltd.) in which the recordable linear velocity range is from 3.5 m/s to 10.5 m/s (corresponding to 1× to 3× of reproduction of a DVD-ROM) in the 1T cycle pattern A and is from 3.5 m/s to 21.0 m/s (corresponding to 1× to 6× of reproduction of a DVD-ROM) in the 2T cycle pattern B, and it is set to select recording condition in which the recording is performed at a speed as high as possible, as the desired optimum condition. When DVD-reproducible contents data was recorded, the 2T cycle pattern B was selected as the recording pulse pattern and 21.0 m/s was selected as recording linear velocity. As parameters of the pulse pattern, coefficients of the pulse width were set as x' = 1.65 and z' = 0.65 for 3T, x' = 1.30, y' = 1.15, and z' = 0.55 for odd-numbered T other than 3T, and x' = 1.20, y' = 1.15, and z' = 0.35 for even-numbered T. Power level Pb' = 0.1 mW. OPC parameters were set as S = 1.55, R = 1.14, E = 0.47, and Pwi = 17.0 mW. When OPC was performed with the parameters, power levels of Pw' = 18.9 mW and Pe = 8,9 mW were set, and recording was conducted at the set power levels.

Table 2 shows the result of characteristic evaluations made on the recorded part by a DVD recording/reproduction evaluation apparatus (DDU-1000 manufactured by Pulstec Industrial Co., Ltd.). The jitter (data to clock jitter) was less than 9% and the modulation degree was higher than 0.6. It is found that recording was conducted with good recording characteristics.

When the contents data recorded on the optical information recording medium C was read by a DVD-ROM reproducing apparatus (MP9120A manufactured by Ricoh Company, Ltd.), the data was successfully read without causing a read error.

Example 2

A CD-compatible phase-change optical information recording medium G on which two types of multipulse patterns are pre-formatted was manufactured. The multipulse patterns are: the 1T cycle pattern A as shown in FIG. 1 including a part of 1T cycles in which the lowest recording linear velocity is 9.6 m/s (corresponding to 8x of reproduction of a CD-ROM) and the highest recording linear velocity is 19.2 m/s (corresponding to 16x of reproduction of a CD-ROM); and the 2T cycle pattern B as shown in FIGs. 3 and 4 including a part of 2T cycles in which the lowest recording linear velocity is 9.6 m/s (corresponding to 8× of reproduction of a CD-ROM) and the highest recording linear velocity is 38.4 m/s (corresponding to 32x of reproduction of a CD-ROM). Table 3 shows an example of information of pulse width, power level, and parameters of OPC in the case of each of the multipulse patterns A and B.

Table 3

| Multipulse pattern | Recording linear velocity | | Signal width | Pulse width | | | Power level | OPC parameters | | | |
|---|---|---|---|---|---|---|---|---|---|---|---|
| | | | | x(x') | y(y') | z(z') | Pb (Pb') | S | R | E | Pwi |
| | [m/s] | CD speed | | | | | [mW] | | | | [mW] |
| A | 9.6 | 8× | 3-11T | 0.40 | 0.20 | 0.80 | 0.1 | 1.35 | 1.20 | 0.28 | 28.0 |
| | 19.2 | 16× | 3-11T | 0.70 | 0.50 | 0.50 | 0.1 | 1.35 | 1.20 | 0.28 | 30.0 |
| B | 9.6 | 8× | 3T | 0.80 | - | 1.70 | 0.1 | 1.30 | 1.20 | 0.32 | 24.0 |
| | | | 5, 7, 9, 11T | 0.50 | 0.50 | 0.50 | | | | | |
| | | | 4, 6, 8, 10T | 0.50 | 0.50 | 0.50 | | | | | |
| | 38.4 | 32× | 3T | 1.50 | - | 1.00 | 0.1 | 1.30 | 1.20 | 0.32 | 26.0 |
| | | | 5, 7, 9, 11T | 1.30 | 1.15 | 0.55 | | | | | |
| | | | 4, 6, 8, 10T | 1.00 | 1.00 | 0.50 | | | | | |

The optical information recording medium G was inserted into an optical information recording apparatus H for CD recording (a test drive manufactured by Ricoh Company, Ltd.) in which the recordable linear velocity range is from 4.8 m/s to 24.0 m/s (corresponding to 4× to 20x of reproduction of a CD-ROM) in the 1T cycle pattern A and is from 4.8 m/s to 38.4 m/s (corresponding to 4× to 32× of reproduction of a CD-ROM) in the 2T cycle pattern B, and it is set to select a recording condition with which recording is performed at a speed as high as possible, as the desired optimum condition. When CD-reproducible contents data was recorded, the 2T cycle pattern B was selected as the recording pulse pattern and 38.4 m/s was selected as recording linear velocity. As parameters of the pulse pattern, coefficients of the pulse width were set as x' = 1.50 and z' = 1.00 for 3T, x' = 1.30, y' = 1.15, and z' = 0.55 for odd-numbered T other than 3T, and x' = 1.00, y' = 1.00, and z' = 0.50 for even-numbered T. Power level Pb' = 0.1 mW. OPC parameters were set as S = 1.30, R = 1.20, E = 0.32, and Pwi = 26.0 mW. OPC was performed with the parameters, power levels of Pw' = 18.9 mW and Pe = 8.9 mW were set, and recording was conducted at the set power levels.

Table 2 shows the result of characteristic evaluations made on the recorded part by a CD recording/reproduction evaluation apparatus (DDU-1000 manufactured by Pulstec Industrial Co., Ltd.). 3T jitter was less than 35 ns and the modulation degree was higher than 0.55 and it is found that recording was conducted with good recording characteristics. When the contents data recorded on the optical information recording medium G was read by a CD-ROM reproducing apparatus (MP9120A manufactured by Ricoh Company, Ltd.), the data was successfully read without causing any read error.

Example 3

A DVD-compatible phase-change optical information recording medium C on which two types of multipulse patterns are pre-formatted was manufactured. The multipulse patterns are: the 1T cycle pattern A as shown in FIG. 1 including a part of 1T cycles in which the lowest recording linear velocity is 3.5 m/s (corresponding to 1x of reproduction of a DVD-ROM) and the highest recording linear velocity is 14.0 m/s (corresponding to 4× of reproduction of a DVD-ROM); and the 2T cycle pattern B as shown in FIGs. 3 and 4 including a part of 2T cycles in which the lowest recording linear velocity is 7.0 m/s (corresponding to 2× of reproduction of a DVD-ROM) and the highest recording linear velocity is 21.0 m/s (corresponding to 6× of reproduction of a DVD-ROM). Table 1 shows information of pulse width, power level, and parameters of OPC in the case of each of the multipulse patterns A and B. Namely, the optical information recording medium is the same as that in Example 1.

The optical information recording medium C was inserted into an optical information recording apparatus F for DVD recording (a test drive manufactured by Ricoh Co., Ltd.) which performs recording if recording can be carried out at the linear velocity of 3.5 m/s (corresponding to 1× of reproduction of a DVD-ROM) in the 1T cycle pattern A as a desired optimum condition. When DVD-reproducible contents data was recorded, the 1T cycle pattern A was selected as the recording pulse pattern and 3.5 m/s was selected as recording linear velocity. As parameters of the pulse pattern, coefficients of the pulse width were set as x = 0.30, y = 0.25, and z = 0.95. Power level Pb = 0.1 mW. OPC parameters were set as S = 1.35, R = 1.18, E = 0.35, and Pwi = 14.2 mW. By performing OPC with the parameters, power levels of Pw' = 15.8 mW and Pe = 5.5 mW were set, and recording was conducted at the set power levels.

Table 2 shows the result of characteristic evaluations made on the recorded part by a DVD recording/reproduction evaluation apparatus (DDU-1000 manufactured by Pulstec Industrial Co., Ltd.). The jitter (data to clock jitter) was less than 9% and the modulation degree was higher than 0.6. It is found that recording was conducted with good characteristics. When the contents data recorded on the optical information recording medium C was read by a DVD-ROM reproducing apparatus (MP9120A manufactured by Ricoh Company, Ltd.), the data was successfully read without causing any read error.

Table 2

|  | Selected recording conditions | | | | | Recording characteristics | | Drive reproduction test |
|---|---|---|---|---|---|---|---|---|
|  | Multipulse pattern | Recording linear velocity | | Recording power | | Jitter | Modulation degree |  |
|  |  |  |  | Pw(Pw') | Ps |  |  |  |
| Example 1 | B | 21.0 [m/ s] | DVD-6× | 18.9 [mW] | 8.9 [mW] | 8.7 (σ/T) (%) | 0.67 | ○ |
| Example 2 | B | 38.4 [m/s] | CD-32× | 31.5 [mW] | 10.1 [mW] | 30 [ns] (3T jitter) | 0.63 | ○ |
| Example 3 | A | 3.5 [m/s] | DVD-1× | 15.8 [mW] | 5.5 [mW] | 7.2 (σ/T)[%] | 0.71 | ○ |

**Claims**

1. An optical information recording medium (1), comprising:

a transparent substrate(2) having one of concentric-circle guide grooves and a spiral guide groove; and
a phase-change recording layer (4), on the transparent substrate (2), which is for generating a phase-change by being exposed to a laser beam the emission of which is controlled where recording marks and spaces between the recording marks both having duration "nT", in which "n" expresses nonnegative integer, and "T" expresses a reference clock period, are to be marked, using Pulse Width Modulation, so as to record, erase, and rewrite information,
wherein the optical information recording medium (1) has recording conditional information pre-formatted thereon,
**characterised in that** the recording conditional information includes information on parameters of a plurality of multipulse patterns having different applied linear velocity ranges and information on each of the different linear velocities at which information can be recorded with each of the multipulse patterns, wherein the multipulse patterns are combinations of a heating pulse and a cooling pulse, which specify a light emission waveform of the laser beam, wherein one of the multipulse patterns is a 1T cycle pattern including a part where the combination of the heating pulse and the cooling pulse is set as a 1T cycle, and

another one of the multipulse patterns is a 2T cycle pattern including a part where the combination of the heating pulse and the cooling pulse is set as a 2T cycle, and the information includes a first linear velocity range for a 1T cycle and a second linear velocity range for a 2T cycle.

2. An optical information recording medium (1) according to Claim 1,
wherein the recording conditional information further includes parameters of test recording corresponding to each of the multipulse patterns.

3. An optical information recording medium (1) according to claim 1,
wherein the 1T cycle pattern is a pattern of which the applied linear velocity range is fixed to a specific linear velocity.

4. An optical information recording medium (1) according to any one of Claims 1 to 3, wherein the recording conditional information is encoded with a wobble of the guide grove.

5. An optical information recording medium (1) according to claim 4,
wherein the recording conditional information is encoded using a frequency modulation of the wobble.

6. An optical information recording medium (1) according to claim 4,
wherein the recording conditional information is encoded using a phase modulation of the wobble.

7. An optical information recording medium (1) according to any one of claims 4 to 6, wherein the recording conditional information is encoded in a lead-in area (14) on the optical recording medium (1).

8. An optical information recording medium (1) according to any one of claims 4 to 6, wherein the recording conditional information is encoded in either a part on the inner radius side of an information recording area (19) or a part on the inner radius side of a test recording area (13), on the optical information recording medium (1).

9. An optical information recording medium (1) according to any one of claims 4 to 6, wherein the recording conditional information is encoded in either a part on the outer radius side of a information recording area (15) and on the outer radius side of a lead-out area (16), or, an area on the outer radius side of an outer peripheral part of a test recording area (13), on the optical information recording medium(1).

10. An optical information recording medium (1) according to any one of claims 1 to 3, wherein the recording conditional information is encoded in a part of an information recording area (15), on the optical information recording medium (1).

11. An optical information recording medium (1) according to any one of claims 1 to 3, wherein the recording conditional information is written as code in a part of a surface of the optical information recording medium (1).

12. A method for determining a recording condition, comprising the steps of:

reading pre-formatted recording conditional information from the optical information recording medium (1) according to any one of claims 1 to 11, which is loaded in an optical information recording apparatus;
comparing the pre-formatted recording conditional information on the optical information recording medium with recording conditional information of the optical information recording apparatus regarding performances including recordable linear velocity;
selecting a recording conditional information satisfying a desired optimum condition based on the result of comparing; and
generating a multipulse pattern used for specifying a light emission waveform of a laser beam, based on the selected recording conditional information, **characterised in that** one of the multipulse patterns is a 1T cycle pattern including a part where the combination of the heating pulse and the cooling pulse is set as a 1T cycle, and another one of the multipulse patterns is a 2T cycle pattern including a part where the combination of the heating pulse and the cooling pulse is set as a 2T cycle, and the information includes a first linear velocity range for a 1T cycle and a second linear velocity range for a 2T cycle.

13. A method for determining a recording condition according to claim 12, further comprising the step of:

performing a test recording onto the optical information recording medium(1) based or parameters of the test recording, which are also pre-formatted as the recording conditional information, corresponding to the generated multipulse pattern, so as to determine emission power of the heating pulse in accordance with the result thereof.

14. A method for determining recording condition according to any one of claims 12 and 13, further comprising the step of:

performing a test recording onto a test recording area of the optical information recording medium (1) based on the selected recording conditional information so as to make a final determination of a desired optimum condition in accordance with propriety of signal characteristics of resulted recording marks.

15. A method for determining a recording condition according to any one of claims 12 to 14, wherein the desired optimum condition is a condition realizing the highest linear velocity among recordable conditions selected based on the result of comparing.

16. A method for determining a recording condition according to any one of claims 12 to 14, wherein the desired optimum condition is a condition realizing the highest linear velocity among recordable conditions selected based on the result of comparing, with a specific multipulse pattern.

17. A method for determining a recording condition according to any one of claims 12 to 14, wherein the desired optimum condition is any recordable condition selected based on the result of comparing, with a specific linear velocity.

18. A method for determining a recording condition according to claims 12 to 14, wherein the desired optimum condition is a condition realizing the highest stability among recordable conditions selected based on the result of comparing.

19. An optical information recording apparatus, comprising:

a rotation controller (22) configured to rotate the optical information recording medium (1) according to any one of claims 1 to 11, disposed thereon;
a light source (23) configured to irradiate a laser beam to the optical information recording medium (1);
a light source driver (42) configured to induce an emission of the light source;
a reader (27) configured to read pre-formatted recording conditional information from the optical recording information medium (1);
a comparing mechanism configured to compare the pre-formatted read recording conditional information, with recording conditional information of the optical recording information apparatus regarding performances including recordable linear velocity;
a selecting mechanism configured to select a recording condition satisfying a desired optimum condition based on the result of comparing by the comparing mechanism;
a pulse pattern generator configured to generate a multipulse pattern used for an emission of the light source, based on the selected recording condition;
an emission waveform controller configured to set a recording strategy which determines a light emission waveform of the laser beam based on the generated multipulse pattern by the pulse pattern generator, and to control the light source driver by the recording strategy; and
a speed controller configured to control a relative sweep speed between the optical information recording medium rotated by the rotation controller and the laser beam irradiated to the optical information recording medium, based on linear velocity of the recording conditional information selected by the selecting mechanism **characterised in that** one of the multipulse patterns is a 1T cycle pattern including a part where the combination of the heating pulse and the cooling pulse is set as a 1T cycle, and
another one of the multipulse patterns is a 2T cycle pattern including a part where the combination of the heating pulse and the cooling pulse is set as a 2T cycle, and the information includes a first linear velocity range for a 1T cycle and a second linear velocity range for a 2T cycle.

20. An optical information recording apparatus according to claim 19, further comprising:

a test recording mechanism configured to perform a test recording to the optical information recording medium based on parameters of the test recording, which is also pre-formatted on the optical information recording medium as the recording conditional information, corresponding to a multipulse pattern of the selected conditional information by the selecting mechanism, so as to determine a light emission power of the heating pulse.

**21.** An optic al information recording apparatus according to any one of claims 19 and 20, further comprising:

a final determination mechanism configured to finally determine a desired optimum condition based on propriety of signal characteristic of resulted recording marks by the test recording mechanism.

**22.** An optical information recording apparatus according to any one of claims 19 to 21, wherein the desired optimum condition is a condition realizing the highest linear velocity among recordable conditions based on the result of comparing by the comparing mechanism.

**23.** An optical information recording apparatus according to any one of claims 19 to 21, wherein the desired optimum condition is a condition realizing the highest linear velocity among recordable conditions based on the result of comparing by the comparing mechanism, with a specific multipulse pattern.

**24.** An optical information recording apparatus according to any one of claims 19 to 21, wherein the desired optimum condition is any recordable condition selected based on the result of comparing by the comparing mechanism, with a specific linear velocity.

**25.** An optical information recording apparatus according to any one of claims 19 to 21, wherein the desired optimum condition is a condition realizing the highest stability among recordable conditions selected based on the result of comparing by the comparing mechanism.

**26.** An information processing apparatus, comprising:

an optical information recording apparatus according to any one of claims 19 to 25.


**Patentansprüche**

**1.** Optisches Informationsaufzeichnungsmedium (1), das umfasst:

ein lichtdurchlässiges Substrat (2), das entweder Führungsrillen in Form konzentrischer Kreise oder eine spiralförmige Führungsrille besitzt; und
eine Phasenänderungs-Aufzeichnungsschicht (4) auf dem lichtdurchlässigen Substrat (2), die dazu dient, eine Phasenänderung durch Belichtung mit einem Laserstrahlenbündel, dessen Emission gesteuert wird, zu erzeugen, wobei Aufzeichnungsmarkierungen und Zwischenräume zwischen den Aufzeichnungsmarkierungen, die beide eine Dauer "nT" haben, wobei "n" eine nicht negative ganze Zahl bezeichnet und "T" eine Referenztaktperiode bezeichnet, unter Verwendung einer Impulsbreitenmodulation markiert werden sollen, um Informationen aufzuzeichnen, zu löschen und neu zu schreiben,
wobei auf dem optischen Informationsaufzeichnungsmedium (1) vorformatierte Aufzeichnungsbedingungsinformationen vorhanden sind,
**dadurch gekennzeichnet, dass** die Aufzeichnungsbedingungsinformationen Informationen über Parameter mehrerer Mehrfachimpulsmuster mit unterschiedlichen angewendeten Lineargeschwindigkeitsbereichen und Informationen über jede der verschiedenen Lineargeschwindigkeiten, mit denen Informationen mit jedem Mehrfachimpulsmuster aufgezeichnet werden können, enthalten, wobei die Mehrfachimpulsmuster Kombinationen aus einem Heizimpuls und einem Kühlimpuls sind, die eine Lichtemissionssignalform des Laserstrahlenbündels spezifizieren, wobei eines der Mehrfachimpulsmuster ein 1T-Zyklus-Muster ist, das einen Teil enthält, in dem die Kombination aus dem Heizimpuls und dem Kühlimpuls als 1T-Zyklus gesetzt ist, und
ein Weiteres der Mehrfachimpulsmuster ein 2T-Zyklus-Muster ist, das einen Teil enthält, in dem die Kombination aus dem Heizimpuls und dem Kühlimpuls als 2T-Zyklus gesetzt ist, und die Informationen einen ersten Lineargeschwindigkeitsbereich für einen 1T-Zyklus und einen zweiten Lineargeschwindigkeitsbereich für einen 2T-Zyklus enthalten.

**2.** Optisches Informationsaufzeichnungsmedium (1) nach Anspruch 1, wobei die Aufzeichnungsbedingungsinformationen ferner Parameter einer Testaufzeichnung, die einem der Mehrfachimpulsmuster entspricht, enthalten.

**3.** Optisches Informationsaufzeichnungsmedium (1) nach Anspruch 1, wobei das 1T-Zyklus-Muster ein Muster ist, dessen angewendeter Lineargeschwindigkeitsbereich auf eine spezifische Lineargeschwindigkeit festgelegt ist.

4.  Optisches Informationsaufzeichnungsmedium (1) nach einem der Ansprüche 1 bis 3, wobei die Aufzeichnungsbedingungsinformationen mit einer Wobbelung der Führungsrille codiert sind.

5.  Optisches Informationsaufzeichnungsmedium (1) nach Anspruch 4, wobei die Aufzeichnungsbedingungsinformationen unter Verwendung einer Frequenzmodulation der Wobbelung codiert sind.

6.  Optisches Informationsaufzeichnungsmedium (1) nach Anspruch 4, wobei die Aufzeichnungsbedingungsinformationen unter Verwendung einer Phasenmodulation der Wobbelung codiert sind.

7.  Optisches Informationsaufzeichnungsmedium (1) nach einem der Ansprüche 4 bis 6, wobei die Aufzeichnungsbedingungsinformationen in einem Anfangsbereich (14) auf dem optischen Aufzeichnungsmedium (1) codiert sind.

8.  Optisches Informationsaufzeichnungsmedium (1) nach einem der Ansprüche 4 bis 6, wobei die Aufzeichnungsbedingungsinformationen auf dem optischen Informationsaufzeichnungsmedium (1) entweder in einem Teil auf der Innenradiusseite eines Informationsaufzeichnungsbereichs (19) oder in einem Teil auf der Innenradiusseite eines Testaufzeichnungsbereichs (13) codiert sind.

9.  Optisches Informationsaufzeichnungsmedium (1) nach einem der Ansprüche 4 bis 6, wobei die Aufzeichnungsbedingungsinformationen auf dem optischen Informationsaufzeichnungsmedium (1) in einem Teil entweder auf der Außenradiusseite eines Informationsaufzeichnungsbereichs (15) oder auf der Außenradiusseite eines Endbereichs (16) oder in einem Bereich auf der Außenradiusseite eines äußeren Umfangsteils eines Testaufzeichnungsbereichs (13) codiert sind.

10. Optisches Informationsaufzeichnungsmedium (1) nach einem der Ansprüche 1 bis 3, wobei die Aufzeichnungsbedingungsinformationen auf dem optischen Informationsaufzeichnungsmedium (1) in einem Teil eines Informationsaufzeichnungsbereichs (15) codiert sind.

11. Optisches Informationsaufzeichnungsmedium (1) nach einem der Ansprüche 1 bis 3, wobei die Aufzeichnungsbedingungsinformationen als Code in einem Teil einer Oberfläche des optischen Informationsaufzeichnungsmediums (1) geschrieben sind.

12. Verfahren zum Bestimmen einer Aufzeichnungsbedingung, das die folgenden Schritte umfasst:

    Lesen von vorformatierten Aufzeichnungsbedingungsinformationen aus dem optischen Informationsaufzeichnungsmedium (1) nach einem der Ansprüche 1 bis 11, das in eine optische Informationsaufzeichnungsvorrichtung geladen ist;
    Vergleichen der vorformatierten Aufzeichnungsbedingungsinformationen auf dem optischen Informationsaufzeichnungsmedium mit Aufzeichnungsbedingungsinformationen der optischen Informationsaufzeichnungsvorrichtung bezüglich Betriebseigenschaften, die eine aufzeichnungsfähige Lineargeschwindigkeit enthalten;
    Auswählen einer Aufzeichnungsbedingungsinformation, die eine gewünschte optimale Bedingung erfüllt, anhand des Vergleichsergebnisses; und
    Erzeugen eines Mehrfachimpulsmusters, das für die Spezifizierung einer Lichtemissionssignalform eines Laserstrahlbündels verwendet wird, anhand der ausgewählten Aufzeichnungsbedingungsinformation, **dadurch gekennzeichnet, dass** eines der Mehrfachimpulsmuster ein 1T-Zyklus-Muster ist, das einen Teil enthält, in dem die Kombination aus dem Heizimpuls und dem Kühlimpuls als 1T-Zyklus gesetzt ist, und ein Weiteres der Mehrfachimpulsmuster ein 2T-Zyklus-Muster ist, das einen Teil enthält, in dem die Kombination aus dem Heizimpuls und dem Kühlimpuls als 2T-Zyklus gesetzt ist, und die Informationen einen ersten Lineargeschwindigkeitsbereich für einen 1T-Zyklus und einen zweiten Lineargeschwindigkeitsbereich für einen 2T-Zyklus enthalten.

13. Verfahren zum Bestimmen einer Aufzeichnungsbedingung nach Anspruch 12, das ferner den folgenden Schritt umfasst:

    Ausführen einer Testaufzeichnung auf dem optischen Informationsaufzeichnungsmedium (1) anhand von Parametern der Testaufzeichnung, die ebenfalls als die Aufzeichnungsbedingungsinformationen vorformatiert sind, entsprechend dem erzeugten Mehrfachimpulsmuster, um so die Emissionsleistung des Heizimpulses in Übereinstimmung mit dem Ergebnis hiervon zu bestimmen.

**14.** Verfahren zum Bestimmen einer Aufzeichnungsbedingung nach einem der Ansprüche 12 und 13, das ferner den folgenden Schritt umfasst:

Ausführen einer Testaufzeichnung auf einem Testaufzeichnungsbereich des optischen Informationsaufzeichnungsmediums (1) anhand der ausgewählten Aufzeichnungsbedingungsinformation, um so eine endgültige Bestimmung einer gewünschten optimalen Bedingung in Übereinstimmung mit der Richtigkeit von Signalcharakteristiken von resultierenden Aufzeichnungsmarkierungen auszuführen.

**15.** Verfahren zum Bestimmen einer Aufzeichnungsbedingung nach einem der Ansprüche 12 bis 14, wobei die gewünschte optimale Bedingung eine Bedingung ist, die die höchste Lineargeschwindigkeit, unter aufzeichnungsfähigen Bedingungen, die anhand des Vergleichsergebnisses ausgewählt werden, ergibt.

**16.** Verfahren zum Bestimmen einer Aufzeichnungsbedingung nach einem der Ansprüche 12 bis 14, wobei die gewünschte optimale Bedingung eine Bedingung ist, die mit einem spezifischen Mehrfachimpulsmuster die höchste Lineargeschwindigkeit unter aufzeichnungsfähigen Bedingungen, die anhand des Vergleichsergebnisses ausgewählt werden, ergibt.

**17.** Verfahren zum Bestimmen einer Aufzeichnungsbedingung nach einem der Ansprüche 12 bis 14, wobei die gewünschte optimale Bedingung irgendeine aufzeichnungsfähige Bedingung, die anhand des Vergleichsergebnisses ausgewählt wird, bei einer spezifischen Lineargeschwindigkeit ist.

**18.** Verfahren zum Bestimmen einer Aufzeichnungsbedingung nach den Ansprüchen 12 bis 14, wobei die gewünschte optimale Bedingung eine Bedingung ist, die die höchste Stabilität unter aufzeichnungsfähigen Bedingungen, die anhand des Vergleichsergebnisses ausgewählt werden, ergibt.

**19.** Optische Informationsaufzeichnungsvorrichtung, die umfasst:

eine Drehsteuereinrichtung (22), die konfiguriert ist, um das optische Informationsaufzeichnungsmedium (1) nach einem der Ansprüche 1 bis 11, das darauf angeordnet ist, rotieren zu lassen;
eine Lichtquelle (23), die konfiguriert ist, um ein Laserstrahlenbündel auf das optische Aufzeichnungsmedium (1) zu strahlen;
einen Lichtquellentreiber (42), der konfiguriert ist, um eine Emission der Lichtquelle zu induzieren;
eine Leseeinrichtung (27), die konfiguriert ist, um vorformatierte Aufzeichnungsbedingungsinformationen von dem optischen Aufzeichnungsinformationsmedium (1) zu lesen;
einen Vergleichsmechanismus, der konfiguriert ist, um die vorformatierten gelesenen Aufzeichnungsbedingungsinformationen mit Aufzeichnungsbedingungsinformationen der optischen Aufzeichnungsinformationsvorrichtung bezüglich Betriebseigenschaften, die eine aufzeichnungsfähige Lineargeschwindigkeit enthalten, zu vergleichen;
einen Auswahlmechanismus, der konfiguriert ist, um eine Aufzeichnungsbedingung, die eine gewünschte optimale Bedingung erfüllt, anhand des Ergebnisses des Vergleichs durch den Vergleichsmechanismus auszuwählen;
einen Impulsmustergenerator, der konfiguriert ist, um ein Mehrfachimpulsmuster, das für eine Emission der Lichtquelle verwendet wird, anhand der ausgewählten Aufzeichnungsbedingung zu erzeugen;
eine Emissionssignalform-Steuereinrichtung, die konfiguriert ist, um eine Aufzeichnungsstrategie festzulegen, die eine Lichtemissionssignalform des Laserstrahlenbündels anhand des durch den Impulsmustergenerator erzeugten Mehrfachimpulsmusters bestimmt, und um den Lichtquellentreiber mit der Aufzeichnungsstrategie zu steuern; und
eine Geschwindigkeitssteuereinrichtung, die konfiguriert ist, um eine relative Abtastgeschwindigkeit zwischen dem optischen Informationsaufzeichnungsmedium, das durch die Rotationssteuereinrichtung zu einer Drehung veranlasst wird, und dem Laserstrahlenbündel, das auf das optische Informationsaufzeichnungsmedium gestrahlt wird, anhand einer Lineargeschwindigkeit der Aufzeichnungsbedingungsinformation, die durch den Auswahlmechanismus ausgewählt wird, zu steuern, **dadurch gekennzeichnet, dass** eines der Mehrfachimpulsmuster ein 1T-Zyklus-Muster ist, das einen Teil enthält, in dem die Kombination aus dem Heizimpuls und dem Kühlimpuls als 1T-Zyklus gesetzt ist, und
ein Weiteres der Mehrfachimpulsmuster ein 2T-Zyklus-Muster ist, das einen Teil enthält, in dem die Kombination aus dem Heizimpuls und dem Kühlimpuls als 2T-Zyklus gesetzt ist, und die Informationen einen ersten Lineargeschwindigkeitsbereich für einen 1T-Zyklus und einen zweiten Lineargeschwindigkeitsbereich für einen 2T-Zyklus enthalten,

**20.** Optische Informationsaufzeichnungsvorrichtung nach Anspruch 19, die ferner umfasst:

einen Testaufzeichnungsmechanismus, der konfiguriert ist, um eine Testaufzeichnung auf dem optischen Informationsaufzeichnungsmedium anhand von Parametern der Testaufzeichnung, die ebenfalls auf dem optischen Informationsaufzeichnungsmedium als die Aufzeichnungsbedingungsinformationen vorformatiert sind, entsprechend einem Mehrfachimpulsmuster der durch den Auswahlmechanismus ausgewählten Bedingungsinformation auszuführen, um so eine Lichtemissionsleistung des Heizimpulses zu bestimmen.

**21.** Optische Informationsaufzeichnungsvorrichtung nach einem der Ansprüche 19 und 20, die ferner umfasst:

einen Mechanismus zur endgültigen Bestimmung, der konfiguriert ist, um eine gewünschte optimale Bedingung anhand der Richtigkeit einer Signalcharakteristik von Aufzeichnungsmarkierungen, die sich durch den Testaufzeichnungsmechanismus ergeben, endgültig zu bestimmen.

**22.** Optische Informationsaufzeichnungsvorrichtung nach einem der Ansprüche 19 bis 21, wobei die gewünschte optimale Bedingung eine Bedingung ist, die anhand des Ergebnisses des Vergleichs durch den Vergleichsmechanismus die höchste Lineargeschwindigkeit unter aufzeichnungsfähigen Bedingungen ergibt.

**23.** Optische Informationsaufzeichnungsvorrichtung nach einem der Ansprüche 19 bis 21, wobei die gewünschte optimale Bedingung eine Bedingung ist, die anhand des Ergebnisses des Vergleichs durch den Vergleichsmechanismus die höchste Lineargeschwindigkeit unter aufzeichnungsfähigen Bedingungen bei einem spezifischen Mehrfachimpulsmuster ergibt.

**24.** Optische Informationsaufzeichnungsvorrichtung nach einem der Ansprüche 19 bis 21, wobei die gewünschte optimale Bedingung irgendeine aufzeichnungsfähige Bedingung bei einer spezifischen Lineargeschwindigkeit ist, die anhand des Ergebnisses des Vergleichs durch den Vergleichsmechanismus ausgewählt wird.

**25.** Optische Informationsaufzeichnungsvorrichtung nach einem der Ansprüche 19 bis 21, wobei die gewünschte optimale Bedingung eine Bedingung ist, die die höchste Stabilität unter aufzeichnungsfähigen Bedingungen, die anhand des Ergebnisses des Vergleichs durch den Vergleichsmechanismus ausgewählt werden, ergibt.

**26.** Informationsverarbeitungsvorrichtung, die umfasst:

eine optische Informationsaufzeichnungsvorrichtung nach einem der Ansprüche 19 bis 25.

**Revendications**

**1.** Support d'enregistrement optique d'informations (1), comprenant :

un substrat transparent (2) comportant des rainures de guidage en cercle concentrique ou une rainure de guidage en spirale ; et
une couche d'enregistrement à changement de phase (4) sur le substrat transparent (2), servant à entraîner un changement de phase par suite de son exposition à un faisceau laser, dont l'émission est contrôlée, les marques d'enregistrement et les espaces entre les marques d'enregistrement ayant tous une durée « nT », « n » exprimant un entier naturel et « T » exprimant une période d'horloge de référence, devant être marqués, par l'intermédiaire d'une modulation d'une largeur d'impulsion, de sorte à enregistrer, effacer et réécrire des informations ;
le support d'enregistrement optique d'informations (1) comportant des informations d'enregistrement conditionnelles qui y sont préformatées ;

**caractérisé en ce que** les informations d'enregistrement conditionnelles englobent des informations sur des paramètres de plusieurs motifs à impulsions multiples présentant différents intervalles des vitesses linéaires appliquées et des informations sur chacune des différentes vitesses linéaires en présence desquelles les informations peuvent être enregistrées avec chacun des motifs à impulsions multiples, les motifs à impulsions multiples constituant des combinaisons d'une impulsion de chauffage et d'une impulsion de refroidissement, spécifiant une forme d'onde d'émission de lumière du faisceau laser, l'un des motifs à impulsions multiples étant un motif à cycle 1T englobant une partie dans laquelle la combinaison de l'impulsion de chauffage et de l'impulsion de refroidissement est ajustée sous forme d'un cycle 1T ; et

un autre des motifs à impulsions multiples étant un motif à cycle 2T, englobant une partie dans laquelle la combinaison de l'impulsion de chauffage et de l'impulsion de refroidissement est ajustée sous forme d'un cycle 2T, les informations englobant un premier intervalle de vitesses linéaires pour un cycle 1T et un deuxième intervalle de vitesses linéaires pour un cycle 2T.

2. Support d'enregistrement optique d'informations (1) selon la revendication 1, dans lequel les informations d'enregistrement conditionnelles englobent en outre des paramètres relatifs à l'enregistrement de test, correspondant à chacun des motifs à impulsions multiples.

3. Support d'enregistrement optique d'informations (1) selon la revendication 1, dans lequel le motif à cycle 1T est un motif dont l'intervalle des vitesses linéaires appliquées est fixé à une vitesse linéaire spécifique.

4. Support d'enregistrement optique d'informations (1) selon l'une quelconque des revendications 1 à 3, dans lequel les informations d'enregistrement conditionnelles sont codées par une vobulation de la rainure de guidage,

5. Support d'enregistrement optique d'informations (1) selon la revendication 4, dans lequel les informations d'enregistrement conditionnelles sont codées par l'intermédiaire d'une modulation de fréquence de la vobulation.

6. Support d'enregistrement optique d'informations (1) selon la revendication 4, dans lequel les informations d'enregistrement conditionnelles sont codées par l'intermédiaire d'une modulation de phase de la vobulation.

7. Support d'enregistrement optique d'informations (1) selon l'une quelconque des revendications 4 à 6, dans lequel les informations d'Enregistrement conditionnelles sont codées dans une zone d'entrée (14) sur le support d'enregistrement optique (1).

8. Support d'enregistrement optique d'informations (1) selon l'une quelconque des revendications 4 à 6, dans lequel les informations d'enregistrement conditionnelles sont codées dans une partie du côté du rayon interne d'une zone d'enregistrement d'informations (19) ou une partie sur le côté du rayon interne d'une zone d'enregistrement de test (13) sur le support d'enregistrement optique d'informations (1).

9. Support d'enregistrement optique d'informations (1) selon l'une quelconque des revendications 4 à 6, dans lequel les informations d'enregistrement conditionnelles sont codées soit dans une partie sur le côté du rayon externe d'une zone d'enregistrement d'informations (15), et sur le côté du rayon externe d'une zone de sortie (16), soit sur une zone sur le côté du rayon externe d'une partie périphérique externe d'une zone d'enregistrement de test (13) sur le support d'enregistrement optique d'informations (1).

10. Support d'enregistrement optique d'informations (1) selon l'une quelconque des revendications 1 à 3, dans lequel les informations d'enregistrement conditionnelles sont codées dans une partie d'une zone d'enregistrement d'informations (15) sur le support d'enregistrement optique d'informations (1).

11. Support d'enregistrement optique d'informations (1) selon l'une quelconque des revendications 1 à 3, dans lequel les informations d'enregistrement conditionnelles sont écrites sous forme d'un code dans une partie d'une surface du support d'enregistrement optique d'informations (1).

12. Procédé de détermination d'une condition d'enregistrement, comprenant les étapes ci-dessous :

extraction d'informations d'enregistrement conditionnelles préformatées du support d'enregistrement optique d'informations (1) selon l'une quelconque des revendications 1 à 11, chargé dans un appareil d'enregistrement optique d'informations ;
comparaison des informations d'enregistrement conditionnelles préformatées sur le support d'enregistrement optique d'informations avec des informations d'enregistrement conditionnelles de l'appareil d'enregistrement optique d'informations en ce qui concerne les performances, englobant la vitesse linéaire enregistrable ;
sélection d'une information d'enregistrement conditionnelle satisfaisant une condition optimale voulue sur la base du résultat de la comparaison ; et
génération d'un motif à impulsions multiples servant à spécifier une forme d'onde démission de la lumière d'un faisceau laser, sur la base de l'information d'enregistrement conditionnelle sélectionnée, **caractérisé en ce que** l'un des motifs à impulsions multiples est un motif à cycle 1T, englobant une partie dans laquelle la combinaison de l'impulsion de chauffage et de l'impulsion de refroidissement est ajustée sous forme d'un cycle 1T ; et

un autre des motifs à impulsions multiples est un motif cycle 2T, englobant une partie dans laquelle la combinaison de l'impulsion de chauffage et de l'impulsion de refroidissement est ajustée sous forme d'un cycle 2T, les informations englobant un premier intervalle des vitesses linéaires pour un cycle 1T et un deuxième intervalle de vitesses linéaires pour un cycle 2T.

13. Procédé de détermination d'une condition d'enregistrement selon la revendication 12, comprenant en outre l'étape ci-dessous :

exécution d'un enregistrement de test sur le support d'enregistrement optique d'informations (1), sur la base de paramètres de l'enregistrement de test, qui sont également préformatés comme informations d'enregistrement conditionnelles, correspondant au motif à impulsions multiples généré, de sorte à déterminer la puissance d'émission de l'impulsion de chauffage en fonction du résultat correspondant.

14. Procédé de détermination d'une condition d'enregistrement selon l'une quelconque des revendications 12 et 13, comprenant en outre l'étape ci-dessons :

exécution d'un enregistrement de test sur une zone d'enregistrement de test du support d'enregistrement optique d'informations (1), sur la base des informations d'enregistrement conditionnelles sélectionnées, de sorte à procéder à une détermination finale d'une condition optimale voulue en fonction de la propriété des caractéristiques du signal des marques d'enregistrement résultantes.

15. Procédé de détermination d'une condition d'enregistrement selon l'une quelconque des revendications 12 à 14, dans lequel la condition optimale voulue est une condition permettant d'établir la vitesse linéaire maximale parmi les conditions enregistrables, sélectionnée sur la base du résultat de la comparaison.

16. Procédé de détermination d'une condition d'enregistrement selon l'une quelconque des revendications 12 à 14, dans lequel la condition optimale voulue est une condition permettant d'établir la vitesse linéaire maximale parmi les conditions enregistrables, sélectionnée sur la base du résultat de la comparaison, avec un motif à impulsions multiples spécifique.

17. Procédé de détermination d'une condition d'enregistrement selon l'une quelconque des revendications 12 à 14, dans lequel la condition optimale voulue est constituée par une quelconque condition enregistrable sélectionnée sur la base du résultat de la comparaison, avec une vitesse linéaire spécifique.

18. Procédé de détermination d'une condition d'enregistrement selon l'une quelconque des revendications 12 à 14, dans lequel la condition optimale voulue est une condition permettant d'établir la stabilité maximale parmi les conditions enregistrables, sélectionnée sur la base du résultat de la comparaison.

19. Appareil d'enregistrement optique d'informations, comprenant :

un moyen de commande de la rotation, (22), configuré de sorte à faire tourner le support d'enregistrement optique d'informations (1) selon l'une quelconque des revendications 1 à 11, qui y est disposé ;
une source de lumière (23), configurée de sorte à appliquer un faisceau laser au support d'enregistrement optique d'informations (1) ;
un moyen d'entraînement de la source de lumière (42), configuré de sorte à entraîner une émission de la source de lumière ;
un lecteur (27), configuré de sorte à extraire les informations d'enregistrement conditionnelles du support d'enregistrement optique d'informations (1) ;
un mécanisme de comparaison, configuré de sorte à comparer les informations d'enregistrement conditionnelles préformatées extraites avec les informations d'enregistrement conditionnelles de l'appareil d'enregistrement des informations optiques en ce qui concerne les performances, englobant la vitesse linéaire enregistrable ;
un mécanisme de sélection, configuré de sorte à sélectionner une condition d'enregistrement satisfaisant une condition optimale voulue sur la base du résultat de la comparaison effectuée par le mécanisme de comparaison ;
un générateur de motifs d'impulsions, configuré de sorte à générer un motif à impulsions multiples en vue d'une émission de la source de lumière, sur la base de la condition d'enregistrement sélectionnée ;
un moyen de commande de la forme d'onde d'émission, configuré de sorte à établir une stratégie d'enregistrement déterminant une forme d'onde d'émission de la lumière du faisceau laser sur la base du motif à impulsions multiples généré par le générateur de motifs d'impulsions, et à contrôler le moyen d'entraînement de la source de lumière sur la base de la stratégie d'enregistrement ; et

un moyen de commande de la vitesse, configuré de sorte à contrôler une vitesse de balayage relative entre le support d'enregistrement optique d'informations, mis en rotation par le moyen de commande de la rotation, et le faisceau laser appliqué au support d'enregistrement des informations optiques, sur la base de la vitesse linéaire du support d'enregistrement optique d'informations sélectionnée par le mécanisme de sélection, **caractérisé en ce que** l'un des motifs à impulsions multiples est un motif à cycle 1T, englobant une partie dans laquelle la combinaison de l'impulsion de chauffage et de l'impulsion de refroidissement est ajustée sous forme d'un cycle 1T ; et

un autre des motifs à impulsions multiples est un motif à cycle 2T, englobant une partie dans laquelle la combinaison de l'impulsion de chauffage et de l'impulsion de refroidissement est ajustée sous forme d'un cycle 2T, les informations englobant un premier intervalle des vitesses linéaires pour un cycle 1T et un deuxième intervalle des vitesses linéaires pour un cycle 2T.

**20.** Appareil d'enregistrement optique d'informations selon la revendication 19, englobant en outre :

un mécanisme d'enregistrement de test, configuré de sorte à exécuter un enregistrement de test sur le support d'enregistrement optique d'informations, sur la base de paramètres de l'enregistrement de test, qui sont également préformatés sur le support d'enregistrement optique d'informations comme informations d'enregistrement conditionnelles, correspondant à un motif à impulsions multiples des informations conditionnelles sélectionnées par le mécanisme de sélection, de sorte à déterminer une puissance d'émission de la lumière de l'impulsion de chauffage.

**21.** Appareil d'enregistrement optique d'informations selon l'une quelconque des revendications 19 et 20, comprenant en outre :

un mécanisme de détermination finale, configuré de sorte à déterminer finalement une condition optimale voulue sur la base de la propriété des caractéristiques du signal des marques d'enregistrement établies par le mécanisme d'enregistrement de test.

**22.** Appareil d'enregistrement optique d'informations selon l'une quelconque des revendications 19 à 21, dans lequel la condition optimale voulue est une condition permettant d'établir la vitesse linéaire maximale parmi les conditions enregistrables, sur la base du résultat de la comparaison effectuée par le mécanisme de comparaison.

**23.** Appareil d'enregistrement optique d'informations selon l'une quelconque des revendications 19 à 21, dans lequel la condition optimale voulue est une condition permettant d'établir la vitesse linéaire maximale parmi les conditions enregistrables, sur la base du résultat de la comparaison effectuée par le mécanisme de comparaison, avec un motif à impulsions multiples spécifique.

**24.** Appareil d'enregistrement optique d'informations selon l'une quelconque des revendications 19 à 21, dans lequel la condition optimale voulue est constituée par une quelconque condition enregistrable sélectionnée sur la base du résultat de la comparaison effectuée par le mécanisme de comparaison, avec une vitesse linéaire spécifique.

**25.** Appareil d'enregistrement optique d'informations selon l'une quelconque des revendications 19 à 21, dans lequel la condition optimale voulue est une condition permettant d'établir la stabilité maximale parmi les conditions enregistrables, sélectionnée sur la base du résultat de la comparaison effectuée par le mécanisme de comparaison.

**26.** Appareil de traitement de l'information, comprenant :

un appareil d'enregistrement optique d'informations selon l'une quelconque des revendications 19 à 25.

# FIG. 1

INPUT SIGNAL

1

0

6T

10

11

12

T    T    T    T    T    T

PULSE PATTERN

Pw

Pe

Pb

xT    yT  (1-yT)  yT  (1-yT)  yT  (1-yT)  yT  zT

EP 1 381 033 B1

# FIG. 2

EP 1 381 033 B1

# FIG. 3

## FIG. 4

INPUT SIGNAL

PULSE PATTERN

$7T$

$10$  $11$  $12$

$T$  $T$  $T$  $T$  $T$  $T$

$Pw'$

$Pe$

$Pb'$

$x'T$  $y'T$  $(2-y')T$  $y'T$  $z'T$

FIG. 5

## FIG. 6

## FIG. 7

# FIG. 8

(M1, S1, F1) = (0, 0, 0) OR (1, 0, 0) : NORMAL ADDRESS
(M1, S1, F1) = (1, 0, 1) : SPECIAL INFORMATION 1
(M1, S1, F1) = (1, 1, 0) : SPECIAL INFORMATION 2
(M1, S1, F1) = (1, 1, 1) : SPECIAL INFORMATION 3
(M1, S1, F1) = (0, 0, 1) : ADDITIONAL INFORMATION 1
(M1, S1, F1) = (0, 1, 0) : ADDITIONAL INFORMATION 2
(M1, S1, F1) = (0, 1, 1) : ADDITIONAL INFORMATION 3

EP 1 381 033 B1

# FIG. 9

EP 1 381 033 B1

# FIG. 10

START

S1 — OPTICAL DISK LOADED ? — N

Y

S2 — REPRODUCE PRE-FORMATTED
INFORMATION
(access address in which parameter is recorded
and reproduce pre-formatted information)

S3 — CALL RECORDING CONDITIONAL
INFORMATION
regarding performances including recordable
liner velocity information of apparatus itself

S4 — COMPARE
recording conditional information of
the disk with that of the apparatus

S5 — SELECT RECORDING CONDITIONAL INDORMATION
satisfying optimum condition
(DETERMINE PULSE PATTERN AND LINER VELOCITY)

S6 — GENERATE MULTIPULSE PATTERN
(generate recording strategy on the basis of parameter
information corresponding to the selected pulse pattern)

S7 — SET OPTIMUM RECORDING
POWER BY OPC

S8 — EXCUTE RECORDING OPERATION
in accrdance with set recording strategy
and recording liner velocity

END

FIG. 11

OPTICAL INFORMATION RECORDING APPARATUS D

<RECORDABLE LINEAR VELOCITY RANGE>
PULSE PATTERN A: 3.5 - 10.5 m/s
PULSE PATTERN B: 3.5 - 21.0 m/s

OPTICAL INFORMATION RECORDING MEDIUM C

<RECORDABLE LINEAR VELOCITY RANGE>
PULSE PATTERN A: 3.5 - 14.0 m/s
PULSE PATTERN B: 7.0 - 21.0 m/s

INSERT

S2 — READING OF RECORDABLE PARAMETERS OF RECORDING MEDIUM C

S4 — COLLATION OF RECORDING CONDITION OF RECORDING MEDIUM C WITH THAT OF RECORDING APPARATUS D

S5 — SELECTION OF RECORDING CONDITIONS
- PULSE PATTERN B
- LINEAR VELOCITY: 21.0 m/s

S6 — ACQUISTION OF SELECTED RECORDING CONDITION

S7 — EXECUTION OF OPC (DETERMINATION OF RECORDING POWER)

S8 — EXECUTION OF RECORDING WITH DETERMINED RECORDING CONDITIONS

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5835462 A
- EP 1182649 A
- JP 3081551 B
- JP 3124721 B